# EUROPEAN PATENT APPLICATION

(11) **EP 3 907 856 A1**
(43) Date of publication of application: **10.11.2021**
(21) Application number: 21164951.2
(22) Date of filing: 23.12.2016
(51) Int. Cl.: H02J 50/20, H02J 50/80, H02J 7/02, H02J 7/00

(54) **SYSTEMS AND METHODS OF WIRELESS POWER CHARGING THROUGH MULTIPLE RECEIVING DEVICES**

(30) Priority: 24.12.2015 US 201562387465 P; 24.12.2015 US 201562387205 P; 28.12.2015 US 201562271837 P; 17.02.2016 US 201615046372; 17.02.2016 US 201615046393; 17.02.2016 US 201615046131; 17.02.2016 US 201615046210; 17.02.2016 US 201615046255; 17.02.2016 US 201615046305; 17.02.2016 US 201615046348; 19.02.2016 US 201615047831; 19.09.2016 US 201615269729
(62) Divisional of application: 16880158.7
(71) Applicant: Energous Corporation, San Jose CA 95134 (US)
(72) Inventor: HOSSEINI, Alister, San Jose, CA 95134 (US); LEABMAN, Michael A., San Ramon, CA 94582 (US)
(74) Representative: Boult Wade Tennant LLP

(57) **Abstract**

Disclosed is a system including RF circuitry configured to generate an RF signal; a plurality of unit cells configured to receive the RF signal and to cause an RF energy signal having a center frequency to be present within at least one of the plurality of unit cells; and receiver circuitry configured to charge an electronic device in response to an antenna of the electronic device receiving the RF energy signal when the antenna is tuned to the center frequency and positioned in a near-field distance from one or more of the plurality of unit cells.

## Description

### TECHNICAL FIELD

Generally, the present disclosure relates to wireless charging. More particularly, the present disclosure relates to low-power near field charging surfaces.

### BACKGROUND

Electronic devices, such as laptop computers, smartphones, portable gaming devices, tablets, or others, require power to operate. As generally understood, electronic equipment is often charged at least once a day, or in high-use or power-hungry electronic devices, more than once a day. Such activity may be tedious and may present a burden to some users. For example, a user may be required to carry chargers in case his electronic equipment is lacking power. In addition, some users have to find available power sources to connect to, which is time consuming. Lastly, some users must plug into a wall or some other power supply to be able to charge their electronic device. However, such activity may render electronic devices inoperable or not portable during charging.

Some conventional solutions include an inductive charging pad, which may employ magnetic induction or resonating coils. As understood in the art, such a solution still requires the electronic devices to: (i) be placed in a specific location on the inductive charging pad, and (ii) be particularly oriented for powering due to electromagnetic fields having a particular orientation. Furthermore, inductive charging units require large coils in both devices (i.e., the charger and the device being charged by the charger), which may not desirable due to size and cost, for example. Therefore, electronic devices may not sufficiently charge or may not receive a charge if not oriented properly on the inductive charging pad. And, users can be frustrated when an electronic device is not charged as expected after using a charging mat, thereby destroying the credibility of the charging mat.

Accordingly, there is a desire for an economical application of a charging surface that allows for low-power, wireless charging without requiring a particular orientation for providing a sufficient charge.

### SUMMARY

In one embodiment, the present disclosure provides a method for charging an electronic device, the method comprising applying an RF signal to a charging surface having a plurality of unit cells to cause an RF energy signal to be present within the unit cells of the charging surface for charging the electronic device in response to an antenna of the electronic device being positioned in a near-field distance from at least one of the unit cells. The unit cells may at least in part be a periodic structure, where the periodic structure may be locally periodic while being adaptive as a function of location within the periodic structure.

In one embodiment, the present disclosure provides a charging surface device comprising: circuitry configured to generate an RF signal; and a plurality of unit cells configured to receive the RF signal and cause an RF energy signal to be present for charging an electronic device in response to an antenna of the electronic device being positioned in a near-field distance measured from a surface of at least one of the plurality of unit cells.

In one embodiment, the present disclosure provides a method for charging an electronic device, the method comprising: applying an RF signal to a plurality of unit cells of a charging surface to cause an RF energy signal to be present within the unit cells of the charging surface; receiving the RF energy signal at an antenna of a electronic device when the antenna is positioned in a near-field distance from at least one of the unit cells; and charging a battery of the electronic device in response to the antenna receiving the RF energy signal.

In one embodiment, the present disclosure provides a system comprising: RF circuitry configured to generate an RF signal; an adaptive coupling surface (here, a charging surface) comprising a plurality of unit cells configured to receive the RF signal and to cause an RF energy signal to be trapped/stored within the unit cells when the receiver device is not present and to leak the energy when the receiver is within a near-field region of the surface. Receiver circuitry of an electronic device to be charged may be configured to charge the electronic device in response to an antenna of the electronic device receiving the RF energy signal when the antenna is positioned in a near-field distance from one or more of the unit cells (of the coupling surface).

In one embodiment, the present disclosure provides a method for charging an electronic device, the method comprising: generating an RF signal; applying the RF signal, by a conductive line extending through a via, to a patch antenna member of a unit cell (i.e., located within the coupling surface, where the patch antenna member or exciting element may be a part of the coupling surface design (e.g., one of the unit cells) or the exciting element may be an additional element placed within the other unit cells); generating, by the patch antenna, an RF energy signal in the unit cell; and leaking the RF energy signal from the unit cell to an antenna of the electronic device when the antenna is positioned in a near-field distance from the unit cell.

In one embodiment, the present disclosure provides a charging surface device comprising: a plurality of unit cells configured to receive one or more RF signals, each unit cell including: a patch antenna configured to: (i) receive one of the one or more RF signals, and (ii) generate an RF energy signal for charging an electronic device, and an aperture configured to leak the RF energy signal from the unit cell when an antenna of the electronic device is positioned in a near-field distance from a respective unit cell.

In one embodiment, the present disclosure provides a method for charging a device, the method comprising: applying an RF signal to a plurality of unit cells of a charging surface to cause an RF energy signal to be present within the unit cells of the charging surface; and filtering the RF energy signal using a harmonic screen filter element to produce the RF energy signal for charging the electronic device in response to an antenna of the electronic device being positioned in a near-field distance from at least one of the plurality unit cells.

In one embodiment, the present disclosure provides a charging surface device comprising: circuitry configured to generate an RF signal; a plurality of unit cells configured to receive the RF signal and to cause an RF energy signal to be present within one or more of the unit cells; and a harmonic screen filter element configured to filter the RF energy signal for charging the electronic device in response to an antenna of the electronic device being positioned in a near-field distance from at least one of the plurality unit cells.

In one embodiment, the present disclosure provides a method of manufacturing a charging surface device, the method comprising: coupling circuitry configured to generate an RF signal to a plurality of unit cells, the plurality of unit cells configured to receive the RF signal and to cause an RF energy signal to be present within one or more of the unit cells; and attaching a harmonic screen filter element configured to filter the RF energy signal for charging the electronic device in response to an antenna of the electronic device being positioned in a near-field distance from at least one of the plurality of unit cells.

In one embodiment, the present disclosure provides a method for charging an electronic device, the method comprising: receiving, by an antenna configured with a bandwidth that includes a center frequency and used to communicate wireless signal, a wireless charging signal operating at the center frequency, the wireless charging signal received from a charging surface positioned in a near-field distance from the antenna; and responsive to determining that the antenna is receiving a power above a threshold level, routing the received wireless charging signal to a rectifier to convert the wireless charging signal to a power signal.

In one embodiment, the present disclosure provides a system comprising: receiver circuitry configured to determine a power from a wireless charging signal received by an antenna used to communicate wireless signals, the wireless charging signal received by the antenna from a charging surface positioned in a near-field distance from the antenna; comparator circuitry configured to compare the power to a threshold level; rectifier circuitry configured to rectify the received wireless charging signal to produce a rectified signal; a voltage converter configured to convert the rectified signal to a voltage to charge a chargeable battery; and switching circuitry configured to route the received wireless charging signal to the rectifier when the power exceeds the threshold level.

In one embodiment, the present disclosure provides a method for charging an electronic device, the method comprising: receiving a signal indicative of a request for charging the electronic device; generating, in response to receiving the signal, an RF signal; applying the RF signal to a plurality of unit cells of a charging surface to cause an RF energy signal to be present in the unit cells of the charging surface for charging the electronic device; and leaking the RF energy signal from the plurality unit cells of the charging surface to an antenna of the electronic device when the antenna is positioned in a near-field distance to at least one of the plurality unit cells.

In one embodiment, the present disclosure provides a charging surface device comprising: control circuitry configured to receive a signal indicative of a request for charging an electronic device; a plurality of patch antennas each configured to generate an RF energy signal; and a plurality of unit cells configured to leak the RF energy signal from the unit cells when an antenna of the electronic device is tuned to the center frequency and positioned in a near-field distance from at least one of the plurality unit cells.

In one embodiment, the present disclosure provides a method for charging an electronic device, the method comprising: producing a low-power RF energy signal in a unit cell of a charging surface; leaking the low-power RF energy signal from the unit cell of the charging surface to an antenna of the electronic device when the antenna is positioned in a near-field distance from the unit cell; sensing the low-power RF energy signal in the unit cell of the charging surface; comparing the low-power RF energy signal in the unit cell of the charging surface to a threshold level; and producing, if the low-power RF energy signal is below the threshold level, a subsequent low-power RF energy signal in the unit cell of the charging surface.

In one embodiment, the present disclosure provides a charging surface device comprising: a feeding element, such as a patch antenna, may be configured to produce a low-power RF energy signal; a unit cell inclusive of the feeding element, here the patch antenna, the unit cell configured to retain the low-power RF energy signal when an antenna of an electronic device is not positioned in a near-field distance from the unit cell, and configured to leak the low-power RF energy signal when the antenna of the electronic device is positioned in the near-field distance from the unit cell; and control circuitry configured to sense the low-power RF energy signal in the unit cell, compare the low-power RF energy signal to a threshold, and to cause, if the low-power RF energy signal is below the threshold, the patch antenna to produce a subsequent low-power RF energy signal stored in the unit cell.

In one embodiment, the present disclosure provides a method for charging an electronic device, the method comprising: leaking an RF energy signal from a charging surface in response to a metal structure being proximately positioned at a surface of the charging surface to cause the RF energy signal to enter a space formed between the surface of the charging surface and the metal structure so that an antenna of the electronic device can receive the leaked RF energy signal and route the received RF energy signal to a rectifier to convert the RF energy signal to charge a chargeable battery.

In one embodiment, the present disclosure provides a method for charging an electronic device, the method comprising: applying an RF signal to a plurality of unit cells of a charging surface to cause an RF energy signal to be present within the unit cells of the charging surface; and leaking the RF energy signal from one or more of the unit cells to a gap formed between a surface of the charging surface and a metal portion of the electronic device positioned in a near-field distance from the one or more of the unit cells to cause an antenna of the electronic device to receive the RF energy signal for charging the electronic device.

In one embodiment, the present disclosure provides a charging surface device comprising: circuitry configured to generate an RF signal; and a plurality of unit cells configured to receive the RF signal and to cause an RF energy signal to be present in the unit cells for charging an electronic device positioned in a near-field distance from one or more of the unit cells by leaking the RF energy signal from the one or more of the unit cells to a cavity/gap formed between a surface of the charging surface and a metal portion of the electronic device to cause an antenna of the electronic device to receive the RF energy signal for charging the electronic device.

In an embodiment, a system for wireless power transfer comprises a first device comprising a first antenna configured to receive one or more RF signals from a charging surface, and a second antenna configured to transmit and receive one or more RF signals to one or more devices in a proximity to the first device; and a second device comprising a first antenna configured to receive the one or more RF signals from the first device, and a battery configured to be charged in response to the second device receiving the one or more RF signals from the first device when the second device is within the proximity to the first device.

In an embodiment, a method for wireless power transfer comprises transmitting, by an antenna of the first device, one or more RF signals to a second device in a proximity to the first device, wherein the second device comprises a first antenna configured to receive the one or more RF signals from the first device, and a battery configured to be charged in response to the second device receiving the one or more RF signals from the first device when the second device is within the proximity to the first device.

In an embodiment, a wireless device comprises a first antenna configured to receive one or more RF signals from a charging surface, and a second antenna configured to transmit and receive one or more different RF signals to one or more wireless devices in a proximity to the wireless device. The wireless device is configured to convert the RF energy into electrical energy for charging a battery.

The following numbered clauses show further illustrative examples only:
1. A wireless device comprising:
   a first antenna configured to receive one or more RF signals from a charging surface, and
   a second antenna configured to transmit and receive one or more different RF signals to and from, respectively, one or more wireless devices in a proximity to the wireless device,
   wherein the wireless device is configured to convert the one or more RF signals into electrical energy for charging a battery.
2. The wireless device of clause 1, wherein the wireless device is further configured to generate one or more additional RF signals for wireless charging of an additional wireless device, distinct from the wireless device, of the one or more wireless devices.
3. The wireless device of clause 2, wherein the wireless device further comprises a plurality of unit cells configured such that an RF energy signal is present for charging the battery of the additional wireless device in response to the additional wireless device being positioned in a near-field distance of at least one of the plurality of unit cells.
4. The wireless device according to clause 3, wherein the near-field distance is less than about 10 mm.
5. The wireless device of any preceding clause, wherein the wireless device is further configured to communicate data and messages with an additional wireless device, distinct from the wireless device, of the one or more wireless devices via the second antenna.
6. A system for wireless power transfer comprising:
   a first electronic device comprising a first antenna configured to receive one or more RF signals from a charging surface, and a second antenna configured to transmit and receive one or more different RF signals to one or more other electronic devices in a proximity to the first electronic device; and
   a second electronic device comprising a third antenna configured to receive the one or more different RF signals from the first electronic device, and a battery configured to be charged in response to the second electronic device receiving the one or more different RF signals from the first electronic device when the second electronic device is within the proximity of the first electronic device.
7. The system of clause 6, wherein the first electronic device is configured to generate the one or more different RF signals.
8. The system of clause 7, wherein the first electronic device is configured to cause an RF energy signal to be present for charging the battery of the second electronic device in response to the third antenna of the second electronic device being positioned in a near-field distance of at least one of the unit cells.
9. The system of clause 6, wherein the second electronic device is configured to generate a separate RF signal.
10. The system of clause 9, wherein the second electronic device comprises a plurality of unit cells configured to cause the separate RF signal to be present for charging a battery of the first electronic device in response to the first antenna of the first electronic device being positioned in a near-field distance of at least one of the plurality of unit cells.
11. The system of any one of clauses 6-10, wherein the second electronic device is positioned on top of the first electronic device.
12. The system of any one of clauses 6-10, wherein the second electronic device and the first electronic device are placed on a same plane at a near-field distance relative to one another.
13. The system of any one of clauses 6-12, wherein the proximity is less than about 10 mm.
14. The system of any one of clauses 6-13, wherein a communication channel between the first electronic device and the second electronic device is established to exchange messages when the second electronic device is being positioned proximate to the first electronic device.
15. The system of clause 14, wherein the second electronic device sends a request to receive power to the first electronic device via the communication channel.
16. A method for wireless power transfer comprising:
   transmitting, by an antenna of a first electronic device, one or more RF signals to a second electronic device in a proximity to the first electronic device,
   wherein the second electronic device comprises:
      a second antenna configured to receive the one or more RF signals from the first electronic device, and
      a battery configured to be charged in response to the second electronic device receiving the one or more RF signals from the first electronic device when the second electronic device is within the proximity to the first electronic device.
17. The method of clause 16, wherein a plurality of unit cells of the first electronic device stores the RF signal and causes an RF energy signal to be present in response to the second antenna of the second electronic device being positioned in the near-field distance of at least one of the plurality of unit cells.
18. The method of any one of clauses 16-17, wherein an additional plurality of unit cells of the second electronic device receives the RF signal and causes an RF energy signal to be present in response to a third antenna of the first electronic device being positioned in the near-field distance of at least one of the additional plurality of unit cells.
19. The method of any one of clauses 16-18, wherein the second electronic device is positioned on top of the first electronic device.
20. The method of any one of clauses 16-18, wherein the second electronic device and the first electronic device are on a same plane at the near-field distance.
21. The method of any one of clauses 16-20, wherein the proximity is less than about 10 mm.
22. The method of any one of clauses 16-21, further comprising establishing a communication channel between the first electronic device and the second electronic device to exchange messages when the second electronic device is within the proximity of the first electronic device.
23. The method according to clause 22, further comprising sending, by the second electronic device, a request to receive power to the first electronic device via the communication channel.
24. A method for charging an electronic device, the method comprising:
   applying an RF signal to a plurality of unit cells of a charging surface to cause an RF energy signal to be present within at least a portion of the plurality of unit cells of the charging surface;
   receiving the RF energy signal at an antenna of the electronic device when the antenna is positioned in a near-field distance from at least one of the plurality of unit cells; and
   charging a battery of the electronic device in response to the antenna receiving the RF energy signal.
25. The method of clause 24, wherein the RF energy signal is leaked, by at least one of the unit cells, to the antenna of the electronic device.
26. The method of clause 25, wherein:
   the RF energy signal operates at a center frequency and
   leaking the RF energy signal includes leaking, by the at least one of the plurality of unit cells, the RF energy signal when the antenna is tuned to the center frequency and positioned in the near-field distance from the at least one of the plurality of unit cells.
27. The method of clause 24, wherein the RF energy signal operates at a center frequency and is received at the antenna when the antenna is tuned to the center frequency.
28. The method of any one of clauses 24-27, wherein the near-field distance is less than about 4 mm.
29. The method of any one of clauses 24-28, wherein the electronic device rectifies the received RF energy signal prior to the battery being charged.
30. The method of any one of clauses 24-29, wherein the charging surface includes a metamaterial.
31. The method of any one of clauses 24-30, wherein the RF energy signal operates at a center frequency and the plurality of unit cells of the charging surface is configured to retain the RF energy signal when no antenna tuned to the center frequency is positioned within the near-field distance from the at least one of the plurality of unit cells.
32. The method of any one of clauses 24-31, wherein applying the RF signal includes generating the RF energy signal using a patch antenna.
33. The method of clause 32, further comprising retaining the RF energy signal in one or more of the plurality of unit cells of the charging surface.
34. The method of clause 33, wherein the RF energy signal is leaked, by at least one of the plurality of unit cells, through an aperture positioned in the at least one of the plurality of unit cells.
35. The method of any one of clauses 24-33, wherein the antenna at which the RF energy signal is received is externally located from the electronic device.
36. A system comprising:
   RF circuitry configured to generate an RF signal;
   a charging surface comprising a plurality of unit cells configured to receive the RF signal and to cause an RF energy signal to be present within at least some of the plurality of unit cells; and
   receiver circuitry configured to charge an electronic device in response to an antenna of the electronic device receiving the RF energy signal when an antenna of the electronic device is positioned in a near-field distance relative to one or more of the plurality of unit cells.
37. The system of clause 36, wherein the RF energy signal operates at a center frequency and the plurality of unit cells of the charging surface are configured to leak the RF energy signal to the antenna of the electronic device when the antenna is tuned to the center frequency.
38. The system of any one of clauses 36-37, wherein the near-field distance is less than about 4 mm.
39. The system of any one of clauses 36-38, wherein the receiver circuitry includes a rectifier circuit configured to rectify the received RF energy signal.
40. The system of any one of clauses 36-39, wherein the RF circuitry includes one or more patch antennas.
41. The system of any one of clauses 36-40, wherein the charging surface includes a metamaterial.
42. The system of any one of clauses 36-41, wherein each unit cell of the plurality of unit cells includes a first substrate layer having a patch antenna and a second substrate layer having an aperture.
43. The system of any one of clauses 36-41, wherein each unit cell of the plurality of unit cells includes a first substrate layer having a patch antenna and an aperture positioned substantially around a perimeter of the patch antenna.
44. The system of any one of clauses 36-43, wherein the RF energy signal operates at a center frequency and each unit cell of the plurality of unit cells is configured to retain the RF energy signal when no antenna tuned to the center frequency is positioned within the near-field distance from at least one of the plurality of unit cells.
45. The system of any one of clauses 36-44, wherein the antenna is externally located from the electronic device.

### BRIEF DESCRIPTION OF THE DRAWINGS

Embodiments of the present disclosure are described by way of example with reference to the accompanying figures, which are schematic and may not be drawn to scale. Unless indicated as representing prior art, the figures represent aspects of the present disclosure.
**FIG. 1A** is an illustration of an example embodiment of an electronic device positioned on an illustrative charging surface that produces an RF energy signal for charging the electronic device, in accordance with an embodiment of the present disclosure;
**FIG. 1B** is an illustration of an illustrative table inclusive of a surface on which an electronic device is positioned, in accordance with an embodiment of the present disclosure;
**FIG. 2A** is a schematic diagram of an illustrative charging surface for generating RF energy signals to charge an electronic device, in accordance with an embodiment of the present disclosure;
**FIG. 2B** is a flow diagram illustrating operation of the illustrative charging surface in accordance with one or more embodiments of the present disclosure;
**FIG. 2C** is a flow diagram illustrating a more detailed operation of the illustrative charging surface in accordance with one or more embodiments of the present disclosure;
**FIG. 3A** is a schematic diagram of an illustrative electronic device for receiving the RF energy signals generated by a charging surface, in accordance with an embodiment of the present disclosure;
**FIG. 3B** is a flow diagram illustrating operation of the illustrative electronic device in accordance with one or more embodiments of the present disclosure;
**FIG. 4A** is an illustrative schematic diagram of circuitry representing the charging surface when no electronic device is positioned within the near-field distance;
**FIG. 4B** is an illustrative schematic diagram of circuitry representing the charging surface when an electronic device is positioned within the near-field distance;
**FIG. 4C** shows schematic models of equivalent circuits with two states of energy flow without and with an electronic device positioned in a near-field distance of the charging surface;
**FIG. 4D** is an illustration of an alternative representation of the schematic models of **FIG. 4C**;
**FIG. 5A** is an illustration of a top-side view of an example embodiment of an antenna portion of a charging surface including two substrate layers, in accordance with an embodiment of the present disclosure;
**FIG. 5B** is a bottom-side view of an example embodiment of the feeding portion (i.e. slot being made into the ground plane of the surface) of a charging surface including two substrate layers, in accordance with an embodiment of the present disclosure;
**FIG. 5C** is a perspective view of an example embodiment of a unit cell used for the antenna portion of the charging surface illustrated in **FIGS. 5A** and **5B**, in accordance with an embodiment of the present disclosure;
**FIG. 5D** is an overhead view of the example embodiment of the unit cell illustrated in **FIG. 5C**, in accordance with an embodiment of the present disclosure;
**FIG. 6A** is a top-side view of an example embodiment of an antenna portion of a charging surface formed with one substrate layer, in accordance with an embodiment of the present disclosure;
**FIG. 6B** illustrates a bottom-side view of an example embodiment of an antenna portion of a charging surface formed with one substrate layer, in accordance with an embodiment of the present disclosure;
**FIG. 6C** illustrates a perspective view of an example embodiment of a unit cell including a portion of the antenna portion of the charging surface illustrated in **FIGS. 6A** and 6B, in accordance with an embodiment of the present disclosure;
**FIG. 6D** illustrates an overhead view of the example embodiment of the unit cell illustrated in **FIG. 6C**, in accordance with an embodiment of the present disclosure;
**FIG. 6E** is an illustration of a cross-sectional view of an illustrative charging surface inclusive of a plurality of unit cells;
**FIG. 7A** illustrates a cross-sectional view of an example embodiment of an electronic device positioned within a near-field distance from a charging surface, in accordance with an embodiment of the present disclosure;
**FIG. 7B** illustrates an illustrative electronic schematic of the electronic device of **FIG. 7A**;
**FIG. 8A** illustrates resonance of an example RF energy signal located between an electronic device with metallic surface and a surface of a charging device, in accordance with an embodiment of the present disclosure;
**FIGS. 8B-8D** illustrate a more detailed schematic of a charging surface that provides for a resonant-coupler to charge an electronic device, in accordance with an embodiment of the present disclosure;
**FIG. 9** illustrates a flow diagram of an example method for charging an electronic device using a charging surface, where the electronic device communicates a signal indicative of a request to charge or otherwise pairs with the charging surface, in accordance with an embodiment of the present disclosure;
**FIG. 10** illustrates a flow diagram of an example method for charging an electronic device using a charging surface when the electronic device does not communicate a signal indicative of a request to charge, in accordance with an embodiment of the present disclosure;
**FIG. 11A** illustrates a perspective view of an embodiment of a unit cell of a charging surface having a harmonic screen filter element, where the harmonic screen filter element is positioned on or above a top surface of the unit cell;
**FIG. 11B** illustrates a cross-sectional view of an embodiment of a unit cell of a charging surface having a harmonic screen filter element (note, the harmonic filter screen may also be made of periodic unit cells), where the harmonic screen filter element is positioned on or above a top surface of the unit cell;
**FIG. 12A** illustrates a perspective view of an embodiment of a unit cell of a charging surface having a harmonic screen filter element, where the harmonic screen filter element is positioned within a substrate layer of the unit cell; and
**FIG. 12B** illustrates a cross-sectional view of an embodiment of a unit cell of a charging surface having a harmonic screen filter element, where the harmonic screen filter element is positioned within a substrate layer of the unit cell.
**FIG. 13A** is a schematic diagram illustrating wireless power transfer among a plurality of devices, in accordance with an embodiment the present disclosure.
**FIG. 13B** is a schematic diagram illustrating wireless power transfer among a plurality of devices, in accordance with an embodiment the present disclosure.
**FIG. 14** is a flow diagram illustrating operations of the wireless power transfer among a plurality of devices, in accordance with an embodiment the present disclosure.

### DETAILED DESCRIPTION

In the following detailed description, reference is made to the accompanying drawings, which form a part hereof. In the drawings, which may not be to scale or to proportion, similar symbols typically identify similar components, unless context dictates otherwise. The illustrative embodiments described in the detailed description, drawings and claims are not meant to be limiting. Other embodiments may be used and/or other changes may be made without departing from the spirit or scope of the present disclosure.

### WIRELESS CHARGING & HIGH-IMPEDANCE SURFACES

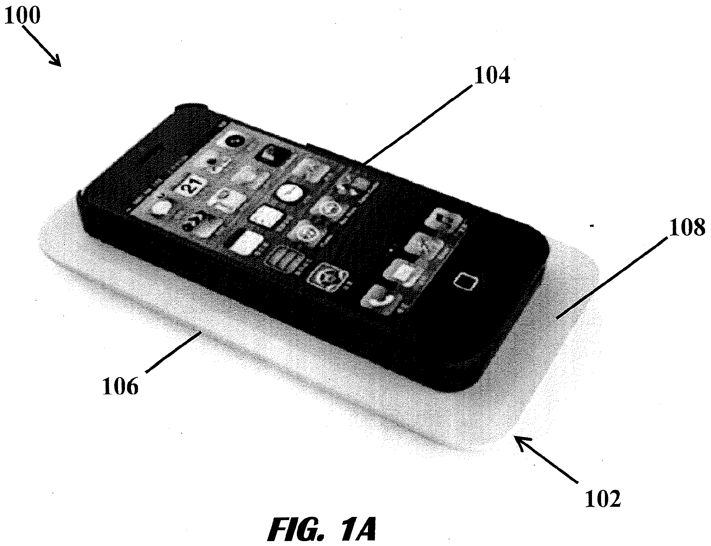

**FIG. 1A** illustrates an embodiment of the present disclosure related to a charging surface, where an exemplary electronic device **104** is positioned on an illustrative charging surface **102** that produces a radio frequency (RF) energy signal for charging the electronic device **104.** The charging surface **102** is shown as a pad, but it should be understood that the charging surface **102** may have any configuration, such as a desktop surface or portion thereof, housing of another electronic or non-electronic device, or any other surface in which RF charging via near-field RF signals may be provided to charge or power an electronic device, as described herein. The charging surface **102** may generate one or more RF energy signals for wireless power transmission that are received by the electronic device **104** when the electronic device **104**, and more specifically, an antenna of the electronic device **104**, is positioned within a near-field distance (e.g., preferably less than approximately 4 mm) from the charging surface **102.** Alternative near-field distances, both higher than 4 mm and lower than 4 mm depending on the application and configuration of the charging surface **102**, may be utilized. The received RF energy signals are then converted to a power signal by a power conversion circuit (e.g., rectifier circuit) (not shown) for charging a battery of the electronic device **104.** In some embodiments, the total power output by the charging surface **102** is less than or equal to 1 Watt to conform to Federal Communications Commission (FCC) regulations part 15 (low-power, non-licensed transmitters).

In some embodiments, the electronic device **104** may include any electronic device including the RF power converter components described herein. For example, the electronic device may be any of a variety of portable technologies, such as a tablet, laptop, cell phone, PDA, wearable device, such as smart watches, fitness devices, headsets, or any other portable, mobile, or other electronic device technology that is capable of being recharged or operated utilizing the principles described herein.

In some embodiments, a charging surface **102** may include a housing defined by a plurality of sidewalls **106**, a top surface **108**, and a bottom surface (not shown). The top surface **108** extends over the bottom surface. The sidewalls **106** span between the top surface **108** and the bottom surface. In some embodiments, the housing is formed of plastic, but alternatively or additionally can be formed of other material(s), such as wood, metal, rubber, glass, or other material that is capable of providing for the functionality described herein. As illustrated in **FIG. 1A**, the charging surface **102** has a shape of a cuboid, but other two-dimensional or three-dimensional shapes are possible, such as a cube, a sphere, a hemisphere, a dome, a cone, a pyramid, or any other polygonal or non-polygonal shape, whether having an open-shape or a closed-shape. In some embodiments, the housing is waterproof or water-resistant. The charging surface **102** may be stiff or flexible and optionally include a non-skid bottom surface to resist movement when placed on a desktop or tabletop. Similarly, the top surface **108** may be or include non-skid region(s) (e.g., strips) (not shown) or be entirely non-skid to resist motion between the surface **108** and an electronic device. Still yet, a bracket or other guide may be mounted to the top surface **108** to assist a user with positioning of an electronic device. The housing may contain various components of the charging surface **102**, which are described in greater detail herein. Note, the charging surface may be made of heat-conductive material (e.g., aluminum nitride) to absorb heat from the receiver device. Moreover, the entire coupling surface may be made of high-DK (i.e., with high dielectric permittivity) plastics/ceramics that may also be used to mold the unit cells to form the surface.

As described in greater detail below, the charging surface **102** may include a plurality of unit cell antennas formed, at least partially, from a substrate material. The substrate may include a metamaterial (i.e., an artificial material being made using small, compared to a wavelength of a signal being transmitted, elements such as patches, dipoles or slots), such as FR4, Rogers, ceramic, or any other material known in the art. The unit cells are designed to retain the RF energy signal used to charge the electronic device **104** prior to the electronic device **104** being placed on the charging surface **102.** That is, when there is no antenna of the electronic device **104** positioned within the near-field distance, or an antenna of the electronic device **104** is not tuned or otherwise configured to receive the RF energy signal, the unit cells do not leak or have minimal leakage of the RF energy signal. However, the unit cells are adaptably configured to allow the RF energy signal to leak from the unit cells to an antenna of the electronic device **104** when the receive antenna is positioned within the near-field distance from the unit cell, and is tuned to the frequency of the RF energy signal (or is otherwise configured to receive the RF energy signal). In the present disclosure, one embodiment of an antenna is considered "tuned" to a particular frequency when leakage of an RF energy signal from the charging surface **102** with metamaterial occurs. One or more surfaces of the unit cell may be formed using metamaterial. For example, a ground plane, antenna patch, and/or both may be formed of metamaterial depending on design criteria.

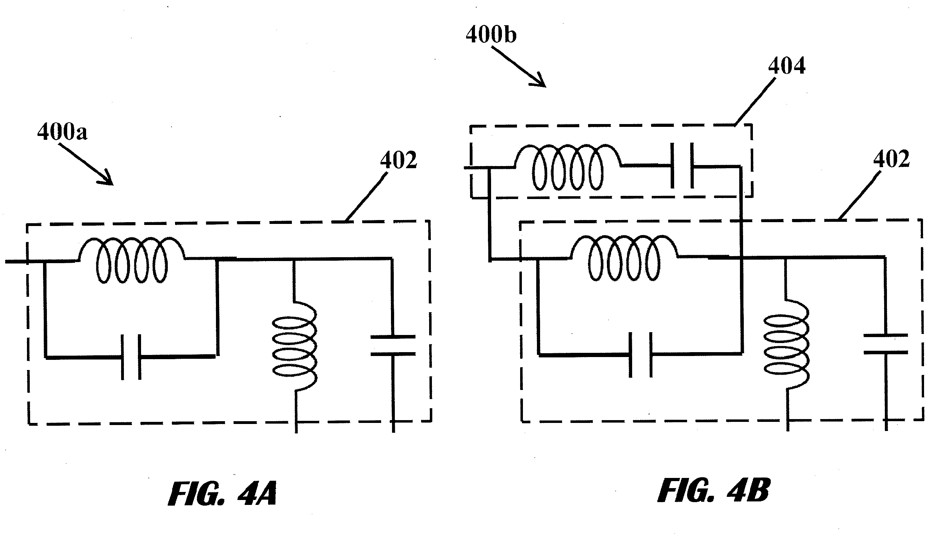

In configuring the unit cells of the charging surface **102**, the unit cells may be periodically spaced and sized such that a frequency signal that is generated and propagating within a substrate of the unit cells may be substantially retained within the charging surface **102** prior to the electronic device **104** being placed within the near-field of the charging surface **102.** That is, when an antenna of the electronic device **104** is place in the near-field of the charging surface **102**, a change in the boundary conditions of the charging surface results due to capacitance and inductance electrical characteristics being introduced by the electronic device at the surface of the unit cells (see **FIGS. 4A** and **4B**).

The surface may be designed so that electromagnetic tuning results to enable leakage at the particular unit cell(s) that are within the near-field distance of the antenna(s) of the charging surface **102.** When "tuned" properly, an RF energy signal is retained within a substrate of the unit cells of the charging surface **102** and no or minimal leakage occurs. The RF energy signal, when no antenna is in the near-field of the charging surface **102**, reflects from the surface of the charging surface **102**, such that no or minimal leakage occurs. And, when "tuned" properly, as when an antenna of the electronic device **104** is within the near-field of the charging surface **102**, the surface characteristics of the charging surface **102** change and the signals may become aligned with slot dipoles or other feature of the unit cell(s) at the location of the antenna of the electronic device **104** to cause leakage to occur at that location. In the event that a different frequency is to be used, a dimensional change may be made to the unit cells of the charging surface **102** to accommodate the different frequency to avoid leakage. As an example, if higher frequencies are used, smaller unit cells need to be included to provide similar performance.

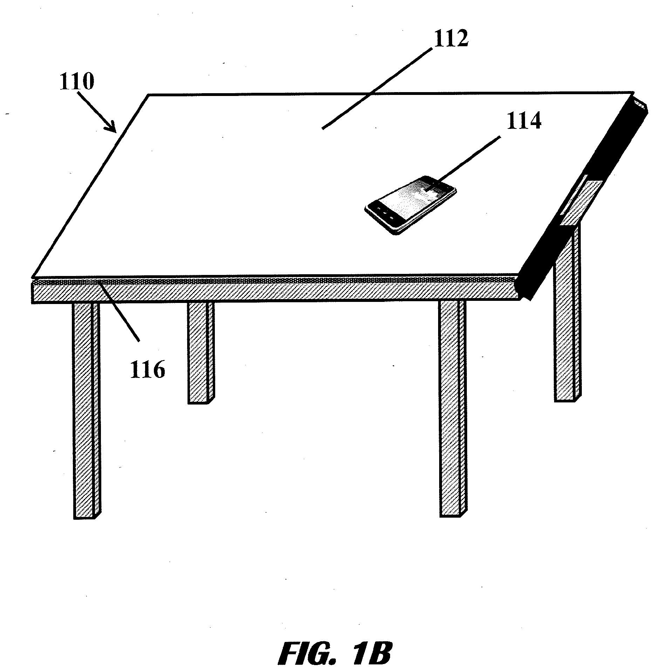

With regard to **FIG. 1B**, an illustration of an illustrative table **110** inclusive of a surface **112** on which an electronic device **114** is positioned is shown. The surface **112** may fully or partially be configured to operate as a charging surface utilizing the same or similar principles and configuration as the charging surface **102.** By providing a piece of furniture, for example, inclusive of a charging surface, the electronic device **114** may be placed on the charging surface **112** and the electronic device **114** will charge independent of a separate charging device or external pad, such as shown in **FIG. 1A****.** It should be understood that a wide variety of devices, furniture, and/or structures may be configured to include a charging surface on one or more surface regions of the devices, furniture, and/or structures. It should also be understood that while a horizontal surface is desirable, alternative angled surfaces may be provided, as well.

As shown, an antenna layer 116 provides for the same or similar structure as the charging surface **102** such that an RF energy signal may be leaked from the charging surface **102** in response to an antenna tuned to the frequency of the RF energy signal being positioned in a near-field distance of the charging surface **102.** In one embodiment, rather than the entire charging surface **112** being configured to operatively charge an electronic device, a portion of the charging surface **112** may be configured to perform the charging functionality, as described herein.

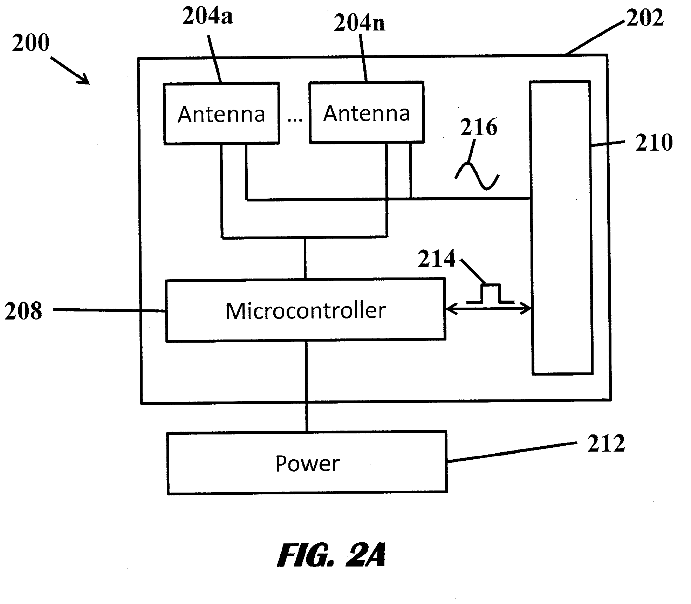

**FIG. 2A** illustrates a schematic diagram **200** of various components including an embodiment of the charging surface **102** of **FIG. 1A**. The charging surface **102** may include a housing **202**, where antenna elements **204** (shown as antenna elements **204a** through **204n**), digital signal processor (DSP) or microcontroller **208**, and optional communications component **210** may be included. Housing **202** can be made of any suitable material, for example plastic or hard rubber, that allows for signal or wave transmission and/or reception. Antenna elements **204** are each disposed within one of the unit cells of the charging surface **102**, and may include suitable antenna types for operating in frequency bands such as 900 MHz, 2.5 GHz, or 5.8 GHz as these frequency bands conform to Federal Communications Commission (FCC) regulations part 18 (Industrial, Scientific and Medical (ISM) equipment). Other frequencies and multiple frequencies are also possible. Suitable antenna types may include, for example, patch antennas with heights from about 1/24 inch to about 1 inch and widths from about 1/24 inch to about 1 inch. Other types of antenna elements **204** may be used, for example, metamaterials and dipole antennas, among others.

In one embodiment, a microcontroller **208** may include circuitry for generating and controlling RF transmission using antenna elements **204.** These RF signals may be produced using an external power supply **212** and RF circuitry (not shown) including a local oscillator chip (not shown) using a suitable piezoelectric material, filters, and other components. These RF signals are then connected to the antennas **204** and cause an RF energy signal to be present in the unit cells of the charging surface **102.** Microcontroller **208** may also process information sent by a receiver through its own antenna elements for determining times for generating the RF signals and for causing the appropriate power level to be produced by the resulting RF energy signals. In some embodiments, this may be achieved using communications component **210** configured to cause the RF energy signals to be produced within a desired frequency range, as previously described and as understood in the art. In an alternative configuration, rather than using a local signal generator, a non-local signal generator (i.e., outside the charging surface **102**) may be utilized.

In some embodiments, a power amplifier (not shown) and gain control circuitry (not shown) may be applied to each antenna **204.** However, given the number of antennas that may be used in a charging surface **102**, the use of one or more power amplifiers to amplify an RF signal (an RF signal that is supplied to or generated within the charging surface **102**) in order to generate an RF energy signal (the signal that is applied to the antennas **204**) to feed each of the multiple antennas **204** provides for reduced circuitry and lower cost. In one specific embodiment, four RF input ports (not shown) may be used to feed the antennas **204** of the charging surface **102.** In designing the charging surface **102**, a single RF input port or RF generator internal to the charging surface **102** may support a certain number or ratio of antennas **204.**

In one embodiment, communications component **210** may include a standard wireless communication protocol, such as Bluetooth® or ZigBee®. In addition, communications component **210** may be used to transfer other data, such as an identifier for the electronic device **104** or surface **102**, battery level, location, charge data, or other such data. Other communications components may be possible, which may include radar, infrared cameras, or frequency-sensing devices for sonic triangulation to determine the position of the electronic device **104.**

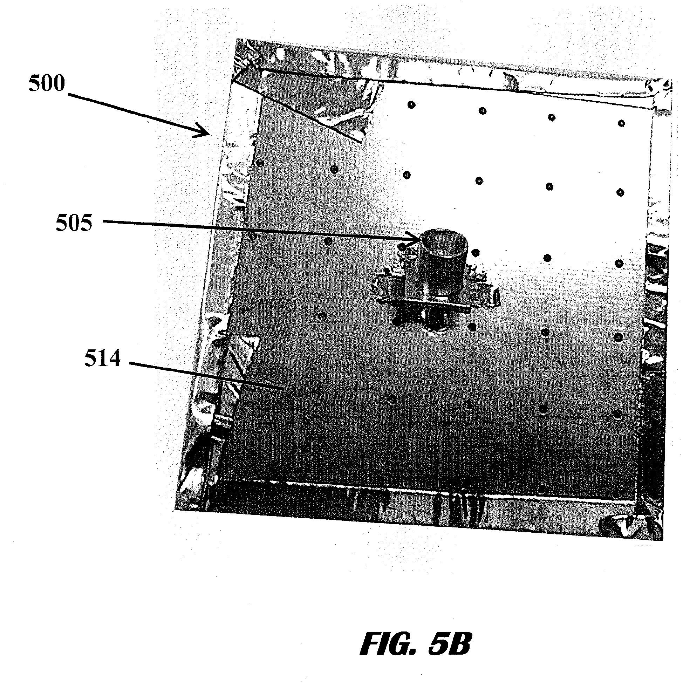

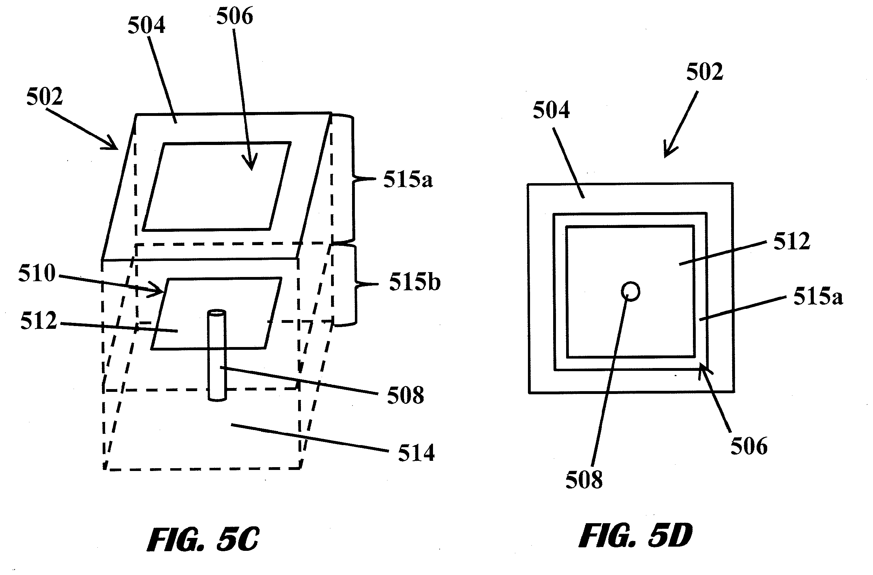

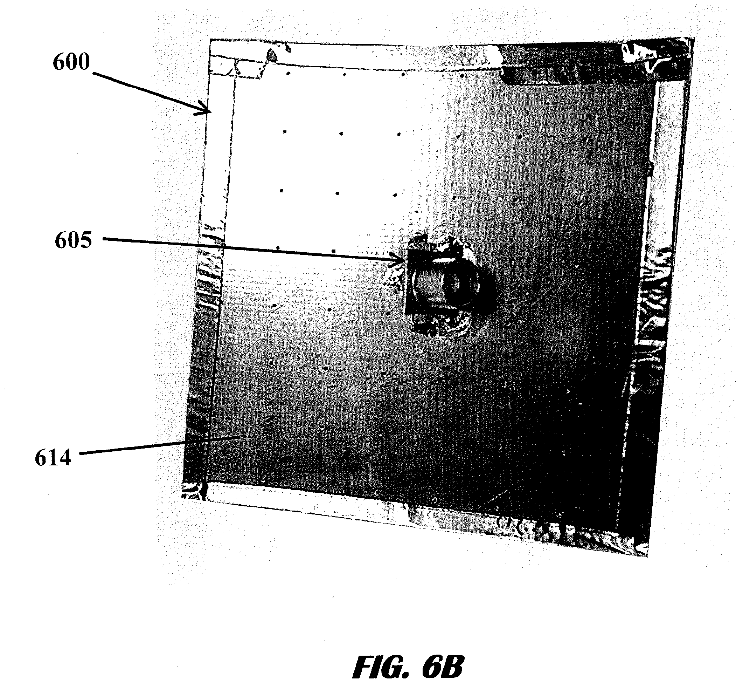

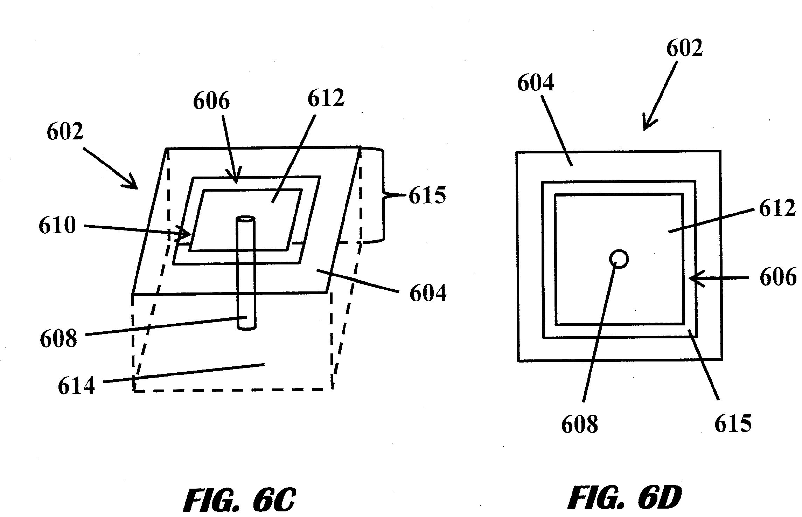

In one embodiment, in response to the communications component receiving a wireless signal (e.g., Bluetooth® signal) from an electronic device to be charged by the charging surface **102**, the microcontroller **208** may be notified using a digital signal **214** to responsively cause the communications component **210** to generate an RF energy signal **216** to be applied to antennas **204.** In an alternative embodiment, the communications component may have its own RF circuitry and antenna(s) for receiving wireless signals, and the microcontroller causes RF energy for charging to be applied to the antennas. With such a configuration, an RF port (see **FIGS. 5B** and **6B**) may provide for an electrical conductor to provide for an RF signal to be communicated to the communications component **210** for processing and communication to the antennas **204.** In yet another embodiment, a separate device, such as battery pack, protection case of a mobile device, or any other device that may be used to charge or power an electronic device may include RF circuitry and antenna(s) for receiving wireless signals from the charging surface **102.**

In one embodiment, a separate antenna (not shown) may be configured to receive RF signals and communicate the received RF signals to the communications component **210** for processing and/or directly routing to the antennas **204.** The use of a separate antenna may enable the charging surface **102** to be operated remotely from a far-field transmitter that transmits an RF charging signal to the charging surface **102** for charging or powering an electronic device in a near-field manner, as described herein.

The power supply **212** may be provided by way of a connection (e.g., a USB or microUSB connection) to a laptop, wall charger, internal battery, external battery, or other power source. The power supply **212** may be used to power circuitry on or at the charging surface **102.**

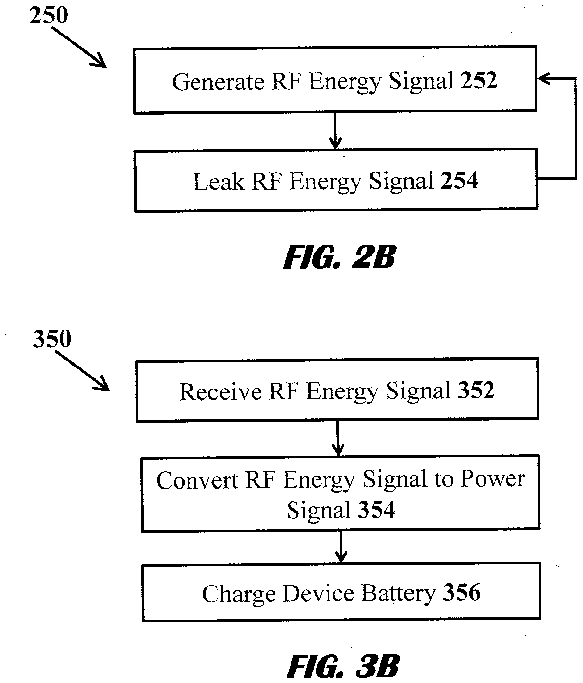

**FIG. 2B** is a flow diagram 250 illustrating general operation of the charging surface **102** in accordance with one or more embodiments of the present disclosure. At step **252**, the charging surface **102** generates an RF energy signal in one or more of the unit cells of the charging surface **102.** The unit cells retain substantially all (e.g., below a certain leakage threshold, such as -30 dB below the RF energy signal) of the RF energy signal used to charge the electronic device **104** when there is no electronic device **104** antenna positioned within a near-field distance from any of the antennas **204** of the unit cells or if the antenna of the electronic device **104** is not tuned or otherwise configured to receive the RF energy signal. At step **254**, the unit cells adapt to allow the RF energy signal to leak from the unit cells to an antenna of the electronic device **104** when the antenna is: (i) positioned within the near-field distance from one of the unit cell antennas **204**, and (ii) tuned to the frequency of the RF energy signal (or is otherwise configured to receive the RF energy signal). The adaption of the unit cells to allow leakage of the RF energy signal is a result of a capacitive inductance element (antenna) being placed in the near-field of one or more of the unit cells. This process continues to charge the electronic device **104.**

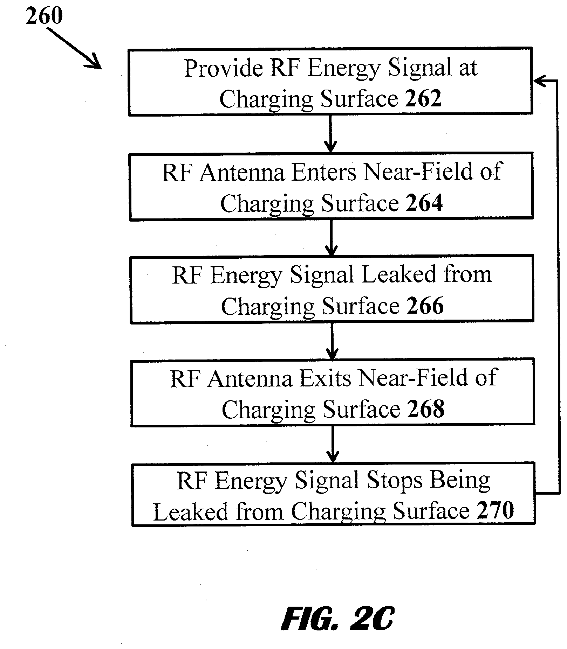

**FIG. 2C** is a flow diagram illustrating a more detailed process **260** of the illustrative charging surface in accordance with one or more embodiments of the present disclosure. The process **260** may start at step **262**, where an RF energy signal may be provided at a charging surface. The RF energy signal may be an RF energy signal that is provided at the charging surface by being contained (trapped/stored) or propagated within a substrate of the charging surface. In an alternative embodiment, rather than providing the RF energy signal at the charging surface, an RF signal that is used to cause the RF energy signal to be propagated within the substrate may be turned off until a change in capacitance, inductance, or RF signal is sensed at the charging surface by a passive or active electronic device. In some embodiments, the RF energy signal may be intermittently turned on or turned on at a low power level until an electronic device is determined to be proximately located or actually within the near-field of the charging surface.

At step **264**, an RF antenna of an electronic device may enter a near-field of the charging surface. The near-field may be a range at which the charging surface is capable of leaking the RF energy signal from the surface in response to a capacitance and/or inductance change near the charging surface, as further described herein.

At step **266**, the RF energy signal may be leaked from the charging surface in response to the RF antenna entering the near-field of the charging surface. As an example, if the amount of RF energy in the RF energy signal that is distributed and propagated within the substrate of the charging surface is 5W, then the RF energy signal may automatically be routed to a location (e.g., above one or more unit cells) of the antenna of the electronic device that is within the near-field of the charging surface and leaked therefrom to cause the 5W to be applied to the antenna entering the near-field of the charging surface. As understood in the art, the amount of charge that results from being in the near-field of the charging surface is based on the amount of coupling between the two antennas. If, for example, a coupling ratio is 1, then there is 0dB loss. If, for example, the coupling ratio is 0.5, then there is a 3dB loss.

At step **268**, when the RF antenna exits from the near-field of the charging surface, the RF energy signal stops being leaked from the charging surface at step 270. At that time, the RF energy signal is again trapped/ stored within the substrate of the charging surface. Alternatively, in one embodiment, the RF signal that is applied to the charging surface to create the RF energy signal is turned off to save power.

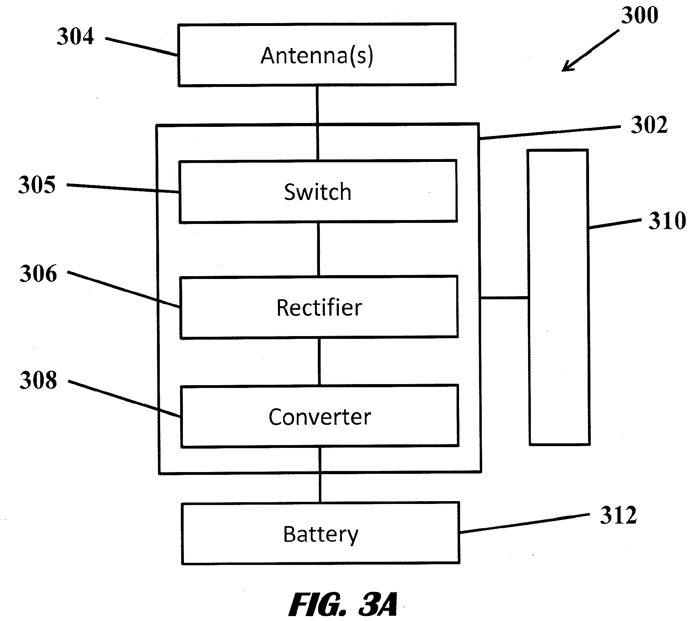

**FIG. 3A** illustrates a schematic diagram **300** of various components comprising an embodiment of the electronic device **104.** The electronic device **104** may include a receiver component **302**, one or more antennas **304**, a battery **312** that is to be charged in accordance with the present disclosure, and an optional communications component **310.** In some embodiments, the communications component **310** may be included in the receiver component **302.** In some embodiments, the receiver component **302** comprises circuitry including one or more switch elements **305**, a rectifier **306**, and a power converter **308**, where the rectifier **306** and power converter **308** may be combined. The receiver **302** may be positioned within the electronic device **104** and connected to the electronic device's antenna(s) **304**, battery **312**, and optional communications component **310.** In some embodiments, the receiver component **302** may include a housing made of any suitable material, for example plastic or hard rubber that may allow for signal or wave transmission and/or reception.

The device antennas **304** may include suitable antenna types for operating in frequency bands similar to the bands described above with respect to **FIG. 2A****.** In some embodiments, the device antennas **304** may include an antenna designed for Wi-Fi data communication with the electronic device **104**, and an antenna designed for wireless data communication associated with telecommunications of the electronic device **104.** The antennas **304** may be conventional and native to the electronic device **104**, such as those produced off-the-shelf for consumer usage. In some embodiments, the device antennas **304** that operate in the frequency bands as described above serve at least two purposes. One exemplary purpose is to facilitate the data communication with the electronic device **104** over wireless standards such as Bluetooth or WLAN for communication of user data as well as for communication of data related to the wireless charging function. A second purpose is to receive the RF charging signal from a charging surface and provide this signal to the receiver component **302.** In such embodiments the device antennas **304** are serving two functions, and there is no separate dedicated antenna for reception of a wireless charging signal.

However, in other embodiments, the electronic device **104** may include two sets of antennas. A first set of one or more antennas to facilitate wireless data communication such as over Bluetooth or WLAN for communication of user data as well as data related to wireless charging operation; and a second set of one or more antennas to receive RF wireless charging signals and provide this signal to the receiver component **302.** In these embodiments, one set of antenna(s) is dedicated to the reception of RF charging signal. Note that in this embodiment, use of separate set of antenna(s) allows for the data communication and RF charging to operate on different frequencies if desired.

The charging surface has a certain operating frequency band. Depending on that operating frequency band of an antenna of an electronic device **104**, the antenna of the electronic device **104** is to be within the operating frequency band of the charging surface so that power transfer within the near-field may be made. As an example, if the RF frequency of the RF energy signal operates within a Wi-Fi frequency band, then antennas for mobile communications will not cause leakage of the RF energy signal due to being outside the frequency band of the charging surface. In one embodiment, a separate device, such as a power pack with an antenna, power converter, and battery, may be configured to operate at a frequency outside the frequency band of conventional mobile communications (e.g., GSM, LTE, etc.). As an example, the charging surface may be configured to operate over an unlicensed frequency band, and a power pack may be configured to also operate over that frequency band so that communications are not impacted when being charged by the charging surface.

In some embodiments, the receiver component **302** may incorporate antennas (not shown) that are used in lieu of, or in addition to, the electronic device antennas **304.** In such embodiments, suitable antenna types may include patch antennas with heights from about 1/24 inch to about 1 inch and widths from about 1/24 inch to about 1 inch, or any other antenna, such as a dipole antenna, capable of receiving RF energy signals generated by the charging surface **102.** Alternative dimensions may be utilized, as well, depending on the frequencies being transmitted by the antenna. In any event, regardless of whether the original device antennas **304** or additional antennas incorporated into the receiver **302** are used, the antennas should be tuned or otherwise be configured to receive the RF energy signal generated by the charging surface **102** when placed within a near-field distance from the charging surface **102.** In some embodiments, the receiver component **302** may include circuitry for causing an alert signal to indicate that the RF energy signal is received. The alert signal may include, for example, a visual, audio, or physical indication. In an alternative embodiment, rather than using an antenna internal to an electronic device, a separate charging device, such as a "back pack" that may simultaneously operate as a protective case, as an example, for the electronic device (e.g., mobile phone), may include an antenna along with a power conversion electronic device that converts the RF energy signal into a DC power signal.

The switch element(s) **305** may be capable of detecting the RF energy signals received at one or more of the antennas **304**, and directing the signals to the rectifier **306** when the detected signals correspond to a power level that exceeds a threshold. The switch element(s) may be formed from electronics, such as diode(s), transistor(s), or other electronic devices that may be used to determine a power level, absolute or average, that causes the switch element(s) **305** to route the signal from a receiver to the rectifier **306** for power conversion thereby. For example, in some embodiments, the switch may direct the received RF energy signals to the rectifier **306** when the RF energy signal received at the antenna **304** is indicative of a wireless power transfer greater than 10 mW. In other embodiments, the switch may direct the received RF energy signals when they are indicative of a wireless power transfer greater than 25 mW. This switching acts to protect from damaging electronic components, such as a receiver circuit, of the electronic device **104** by preventing a power surge from being applied thereto. If the threshold power is not reached, the electronic device operates in a conventional manner.

The rectifier **306** may include diodes, resistors, inductors, and/or capacitors to rectify alternating current (AC) voltage generated by antennas **304** to direct current (DC) voltage, as understood in the art. In some embodiments, the rectifier **306** and switch **305** may be placed as close as is technically possible to the antenna element **304** to minimize losses. After rectifying AC voltage, DC voltage may be regulated and/or conditioned using power converter **308.** Power converter **308** can be a DC-DC converter, which may help provide a constant voltage output, regardless of input, to an electronic device or, as in this embodiment, to a battery **312.** Typical voltage outputs can be from about 0.5 volts to about 10 volts. Other voltage output levels may be utilized, as well.

Optional communications component **310**, similar to that described above with respect to **FIG. 2A**, may be included in electronic device **104** to communicate with the communications component **210** and other electronic equipment. The communications component **310** may be integrated with the receiver component **302** or may be a discrete component located in the electronic device **104.** In some embodiments, the communications component **310** may be based on standard wireless communication protocols, which may include Bluetooth® or ZigBee®. In addition, communications component **310** may be used to communicate other data, such as an identifier for the electronic device **104** or charging surface **102**, battery level, location, power requirements specific to the electronic device **104**, or other data.

**FIG. 3B** is a flow diagram **350** illustrating general operation of the electronic device **104** in accordance with one or more embodiments of the present disclosure. At step **352**, the antenna **304** receives an RF energy signal from one or more of the unit cells of the charging surface **102** when the antenna **304** is tuned to the frequency of the RF energy signal (or is otherwise configured to receive the RF energy signal) and is positioned within a near-field distance from one or more of the antennas **204** of the unit cells. At step **354**, the receiver component **302** converts the received RF energy signal to a power signal that is used to charge the device battery **312** at step **356.** Alternatively, rather than charging a battery, the power signal may power circuitry of the electronic device directly, thereby enabling the electronic device to be operated independently of a battery.

**FIG. 4A** illustrates a schematic diagram of an electrical circuit model **400a** representing the electrical state of the charging surface **102** when the electronic device 104 is not positioned within the near-field distance from the charging surface **102.** The electrical circuit model **400a** includes circuitry **402** representative of the electromagnetic operation of the charging surface **102** when no electronic device antenna(s) **304** is (are) positioned in a near-field distance from the charging surface **102.** The electrical circuit model **400a** represents a model of the charging surface **102** that is configured not to leak or otherwise output RF signals due to not being tuned or otherwise operating as high-impedance prior without an antenna of an electronic device being positioned within the near-field distance of the charging surface **102.**

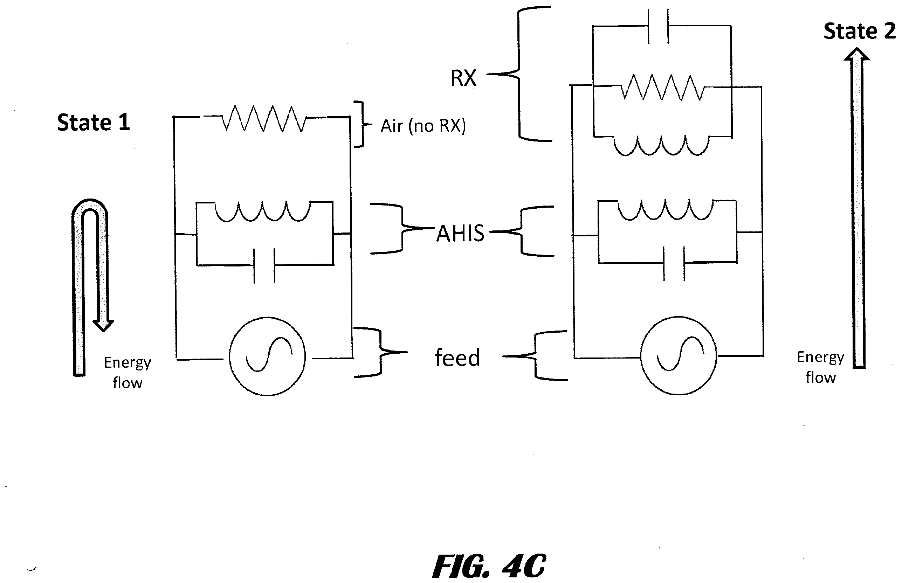

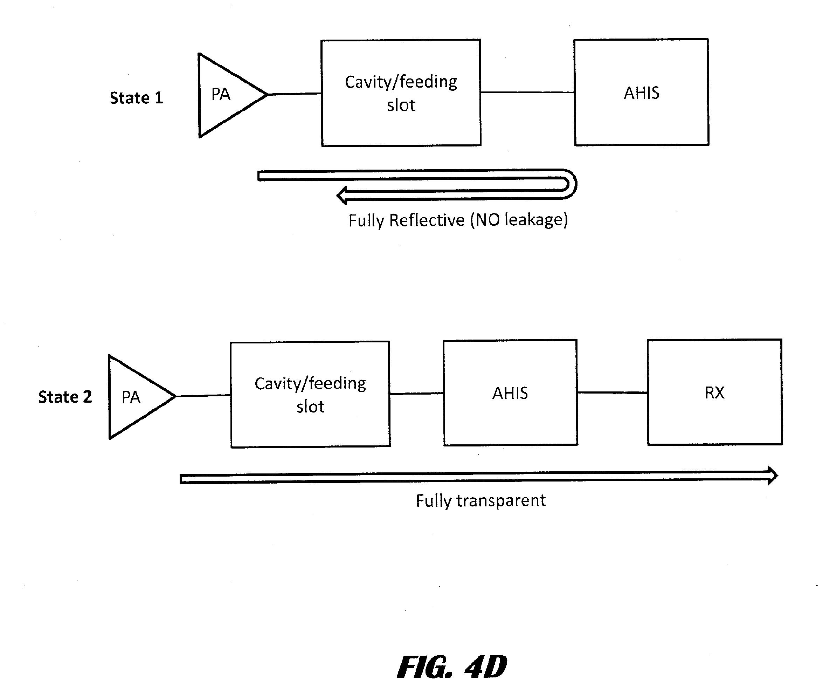

**FIG. 4B** illustrates a schematic diagram of an electrical circuit model **400b** representing an electrical connection between the charging surface **102** and the electronic device **104** when the electronic device **104** is positioned within the near-field distance from the charging surface **102** and the antenna(s) **304** of the electronic device **104** is (are) tuned to the center frequency of the RF energy signal generated by the charging surface **102.** The electrical circuit model includes circuitry **404** representative of the electronic device **104** being electromagnetically coupled to the circuitry **402** of the charging surface **102** to cause a change in the electromagnetic operation of the charging surface **102.** The electrical circuit model **400b** represents a model of the charging surface **102** that is configured to leak or otherwise output RF signals when an antenna of an electronic device is positioned within the near-field distance of the charging surface **102** so as to cause the representative electrical circuit model **400b** to become tuned due to coupling effects, as understood in the art and further described with regard to **FIGS. 4C** and **4D****.**

**FIG. 4C** shows schematic models of equivalent circuits with two states of energy flow without and with an electronic device positioned in a near-field distance of the charging surface. In the first state, air causes a reflection of energy from a high impedance surface of the charging surface. In the second state, inclusion of an antenna receiver in a near-field of the surface forms an inductive coupling that enables energy flow through the high impedance surface of the charging surface. **FIG. 4D** is an illustration of an alternative representation of the schematic models of **FIG. 4C****.** It should be understood that the models in **FIGS. 4C** and **4D** are simplified and more complex models may be utilized to represent the adaptive high-impedance surface.

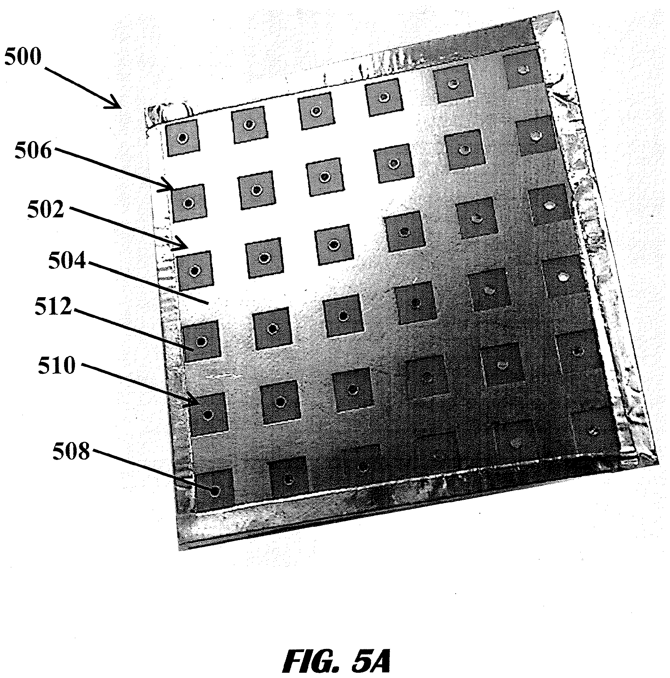

Referring now to **FIGS. 5A-5D**, an example embodiment of an antenna portion **500** of a charging surface is provided, where the antenna portion **500** includes a plurality of unit cells **502** arranged in a matrix formation. In some embodiments, each of the unit cells **502** includes two substrate layers **515a** and **515b.** In some embodiments, the top substrate layer **515a** of each of the unit cells **502** includes a metal portion **504** (e.g., copper) defining apertures **506** positioned at the top of the unit cells **502.** In some embodiments, the bottom substrate layer **515b** of each unit cell **502** includes a patch antenna **510** comprising a metal patch **512** having an electrical connection through a via **508** to a ground plane **514.** In some embodiments, the ground plane **514** may be a metamaterial. In some embodiments, the ground plane **514** is connected to an RF port **505** as shown in **FIG. 5B** for conducting RF signals to unit cells **502.**

In some embodiments, the patch antenna **510** is configured to generate the RF energy signal that radiates within the top substrate layer **515a.** In accordance with the present disclosure, the RF energy signal remains in the top substrate layer **515a** until the RF energy signal decays or is leaked to an antenna **304** (**FIG. 3**) of an electronic device positioned on a charging surface.

In some embodiments, the size of the aperture **506** is determined in accordance with the periodic frequency of the RF energy signal such that the RF energy signal does not leak from the aperture **506** in respective unit cells **502** unless an antenna tuned to the frequency of the RF energy signal is positioned in a near-field distance (e.g., less than about 4 mm) from at least one of the unit cells **502.**

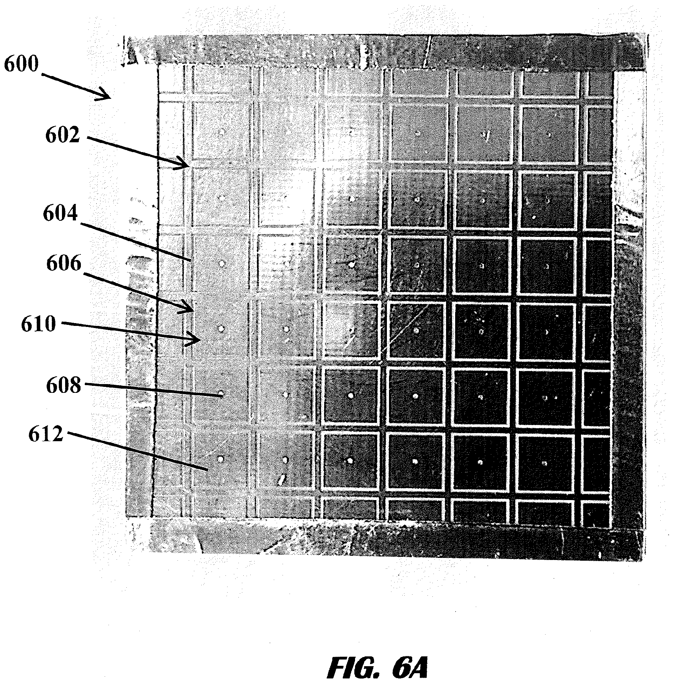

Referring now to **FIGS. 6A-6D**, an example embodiment of an antenna portion 600 of a charging surface is provided, where the antenna portion **600** is composed of a plurality of unit cells **602** arranged in a matrix formation. In some embodiments, each of the unit cells **602** includes one substrate layer **615** having a metal portion **604** (e.g., copper) defining an aperture **606** positioned at the top of the unit cells **602.** In some embodiments, the unit cells **602** also include a patch antenna **610** formed by a metal patch **612** having an electrical connection through a via **608** to a ground plane **614.** In some embodiments, the ground plane **614** may be physically and electrically connected to an RF port **605,** as shown in **FIG. 6B****.** In some embodiments, the RF port **605** may be used to provide an RF energy signal from an RF energy signal generator to be applied to each of the unit cells **602**, and the ground plane **614** may be electrically connected to a ground portion of the RF port **605.**

In the embodiment illustrated in **FIGS. 6A-6D****,** the patch antenna **610** is positioned within the unit cell **602** such that the aperture **606** is formed around a perimeter of the metal patch **612.** In some embodiments, the patch antenna **610** is configured to propagate the RF energy signal from the top surface of the substrate layer **615.** In accordance with the present disclosure, the RF energy signal remains at or near the top surface of the substrate layer **615** until the RF energy signal decays or is received by the electronic device antenna **304.**

In some embodiments, the size of the aperture **606** is determined in accordance with the periodic frequency of the RF energy signal generated by the patch antenna **610** such that the RF energy signal does not or has minimal leakage from the aperture **606** of the unit cells **602** unless an antenna tuned to the frequency of the RF energy signal is positioned in a near-field distance from at least one of the unit cells **602.** The aperture **606** may be altered in dimension depending on frequency of the RF energy signal so as to be properly tuned for preventing leakage of the RF energy signal when no electronic device is positioned in the near-field. It should be understood that a number of layers of the unit cell may vary depending on the application, where different number of layers may provide different responses from the unit cells to provide different harmonic responses (e.g., higher or shifted harmonic frequencies for different wireless powering applications).

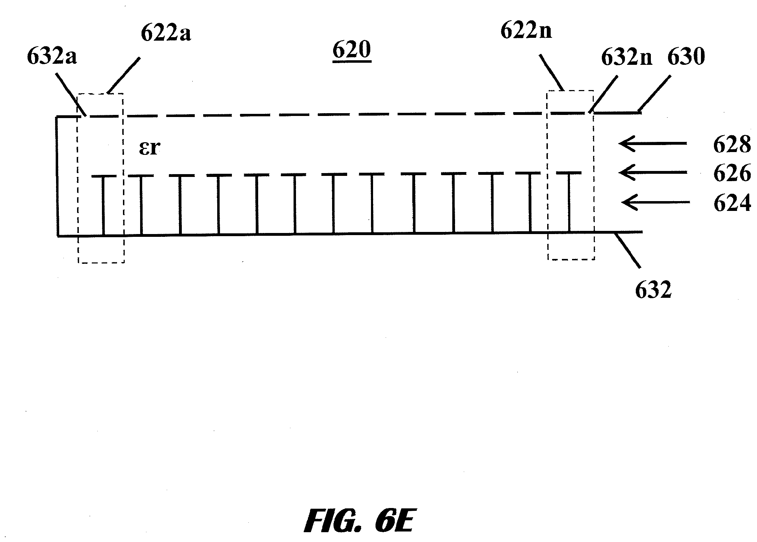

**FIG. 6E** is an illustration of a cross-sectional view of an illustrative charging surface **620** inclusive of a plurality of unit cells **622a-622n** (collectively **622**). In some embodiments, the unit cells **622** include vias **624**, patches or slots **626**, substrate **628**, and surface element **630.** In some embodiments, the surface element **630** includes a plurality of holes or patches **632a-632n** (collectively **632**). In some embodiments, the length and width of the unit cells **622** are between about 5mm and about 10mm. It should be understood that alternative dimensions may be utilized as a function of the frequency being propagated or trapped/stored by the unit cells and/or the material being used to form the surface **622.** In some embodiments, the substrate **628** may be formed of Rogers FR-4, ceramic, or other material. In some embodiments, the use of a substrate **628**, such as ceramic, allows for the dimensions of the unit cells to be smaller than otherwise possible without a substrate 628.

### RESONANCE

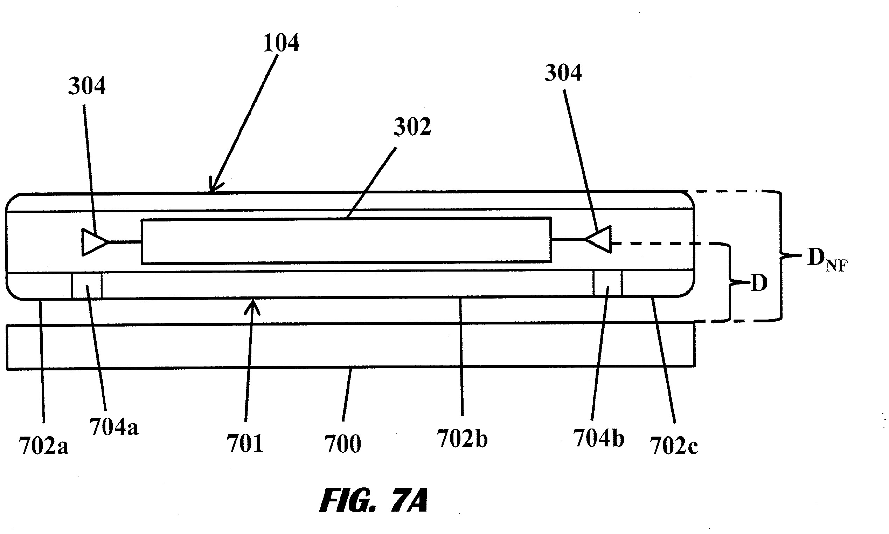

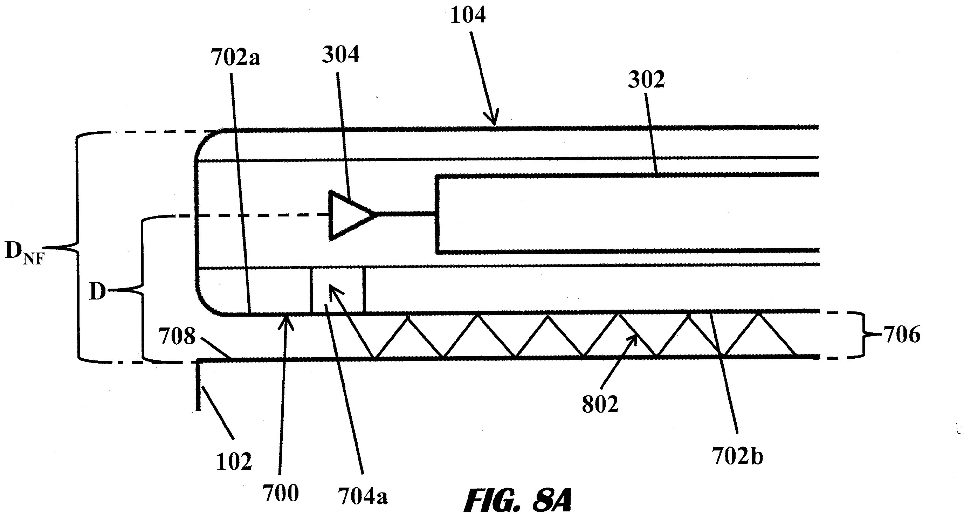

A resonant coupler may be formed when a device to be charged enables transmission of power and operates as part of a charging system. For example, a mobile telephone having a metallic case may be utilized to complete a charging device, as further described in **FIGS.** 7A and **8A****-8C.** In some embodiments, the charging system may work in two different stages. A first stage may provide for a field being fed through a feeding point (e.g., slot on a ground plane) into a first cavity and getting trapped in the structure of the first cavity. The first cavity may include a number of touch/leak points that are activated when being touched by or proximately close to an electronic device with a metal case. A second stage may operate when the electronic device is placed on the surface at a touch point so that energy leaks out of the second cavity formed in part by the electronic device on top of the charging surface.

**FIGS. 7A****,** **8A-8C** illustrate a cross-sectional view of the electronic device **104** positioned a distance **D** within a near-field distance **D_{NF}** from a charging surface **700**, in accordance with an embodiment of the present disclosure. Thus, in accordance with the present embodiment, the antenna(s) **304** of the electronic device **104** are positioned a distance **D**, which is within the near-field distance **D_{NF}**. The RF energy signals generated by the charging surface **700** in the near-field do not achieve a particular polarization before being received by the antenna(s) **304** of the electronic device **104.** In some embodiments, the near-field distance **D_{NF}** is less than approximately 4 mm.

In the embodiment illustrated in **FIGS. 7A** and **8A****-8C**, the electronic device **104** includes a back surface **701** that is generally formed of metallic surfaces **702a**, **702b**, and **702c** and includes defining gaps **704a** and **704b** that are non-metallic and that may be formed of a plastic, glass, or any other material suitable to allow signal or wave transmission and/or reception. The gaps **704a** and **704b** are located proximate the antennas **304** such that the antennas **304** may receive signals entering through the gaps **704a** and **704b.** The metallic surfaces **702a**, **702b**, and **702c** reflect RF energy signals **802**, as shown in **FIG. 8A**, such that the RF energy signal **802** generated by the charging surface **700** traverses or resonates within a cavity **706** formed between a top surface **708** of the charging surface **700** and one or more of the metallic surfaces **702a, 702b,** and **702c** until it reaches at least one of the gaps **704a** and **704b.** The RF energy signal **802** traverses or resonates between the metal surface **702b**, for example, and top surface of the charging surface **700** as a trapped wave in the cavity **706** (see **FIG. 8A**, RF energy signal **802** reflecting between the two surfaces). The gaps **704a** and **704b** are positioned above the charging surface **700**, and more specifically, one or more unit cells of the charging surface **700**, so that the RF energy signal **802** can traverse the cavity **706** to reach one of the gaps **704a** and **704b.** When the RF energy signal **802** reaches the gap **704a**, the RF energy signal **802** enters through the gap **704a** and is received by the device antenna **304.**

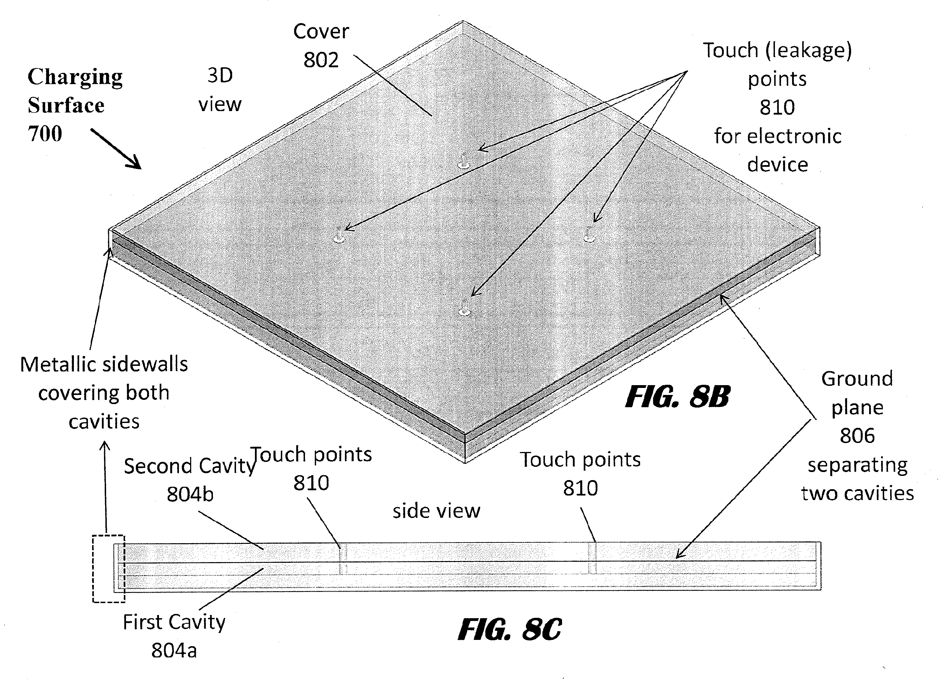

In some embodiments, as shown in **FIGS. 8B** and **8C**, the charging surface **700** is shown to include a cover **802** within which a first cavity **804a** and a second cavity **804b** (collectively **804**) are formed by a ground plane **806** that separates the two cavities **804.** The ground plane may be formed of metamaterial, as described herein. The charging surface **700** may also include one or more touch points **810** from which an RF energy signal emanates. In operation, a first stage may provide for an RF energy signal being fed through a feeding point (e.g., slot on a ground plane) into the first cavity **804a** and gets trapped in the structure of the first cavity **804a.** The first cavity **804a** may include a number of touch/leak points **810** that are activated when being touched by or proximately close to an electronic device with a metal case. A second stage may operate when the electronic device is placed on the cover **802** at least one of the touch points **810** so that energy leaks out of the second cavity **804b** formed in part by the electronic device on top of the cover **802** of the charging surface **700.** Because only a few touch points **810** are utilized in this charging surface **700**, fewer power amplifiers are needed to supply RF energy signals, thereby costing less than having many more touch points. In one embodiment, four touch points **810** may be utilized. However, it should be understood that the number of touch points may vary depending on the size of the area provided by the charging surface **700.** If a large area (e.g., desk) is provided, then more touch points **810** are provided. If a smaller area (e.g., pad) is provided, then fewer touch points 810 are provided.

In some embodiments, such as that shown in **FIGS. 7A** and **8A**, the metallic surfaces **702a**, **702b**, and **702c** are positioned substantially parallel to the top surface **708** of the charging surface **700.** Although the RF energy signal **802** is represented in **FIG. 8A** as having a triangle waveform reflection, it should be appreciated that the RF energy signal **802** may be reflected in other patterns, as understood in the art. As used herein, "traverses" refers to the RF energy signal travelling along or through a space or cavity by reflecting off of surfaces.

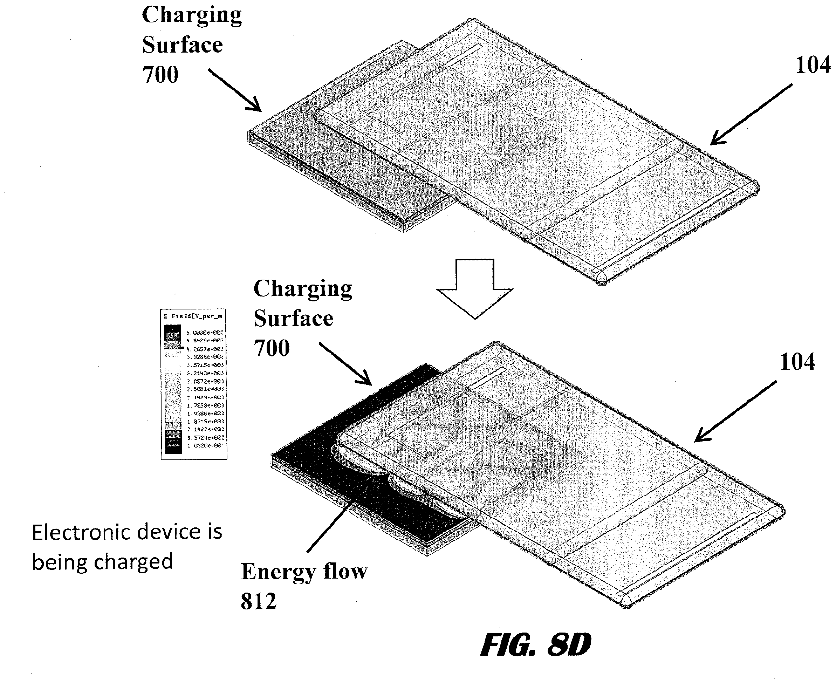

**FIG. 8D** shows the electronic device **104** being placed on the charging surface 700. As the electronic is placed on the charging surface **700**, energy flow **812** from an RF energy signal is created in the cavity formed by the electronic device **104** and the charging surface.

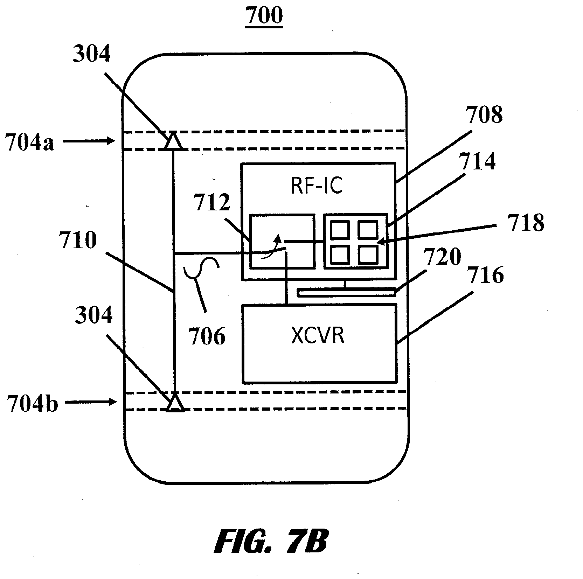

**FIG. 7B** illustrates an illustrative electronic schematic of the electronic device **104** of **FIG. 7A****.** The electronic device **104** is shown to include the two gaps **704** within which the antennas **304** are positioned to receive RF signals **706.** The antennas **304** are in electrical communication with an RF integrated circuit (RF-IC) **708** via electrical conductor **710.** The RF-IC **708** is shown to include a switch **712** and rectifier device **714.** The switch **712** may be configured to cause the RF signals **706** to be routed to a transceiver (XCVR) **716** when communications signals. The transceiver **716** is a conventional transceiver used for user communications, as understood in the art. However, in response to the RF signals **706** crossing a certain threshold level, such as 0.1W or 0.25W, the switch **712** may be activated to cause the RF signals **706** to be routed to the rectifier device **714** that includes one or more rectifiers **718** therein. The switch **712** may be a solid state switch, as understood in the art. An output from the rectifier device **714** may be routed to a battery **720** used to power the electronic device **104.**

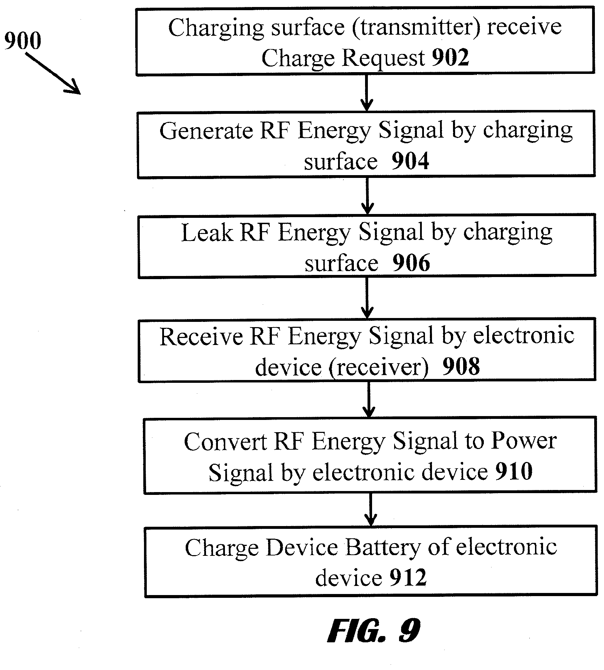

Referring now to **FIG. 9**, an example method is shown in flow diagram **900** for charging the electronic device **104** with the charging surface **700** in accordance with an embodiment of the present disclosure. In the embodiment illustrated in **FIG. 9**, the charging surface **102** communicates with the electronic device **104** via respective communication components **210** and **310.** At step **902**, the charging surface communication component **210** receives, from the electronic device communication component **310**, a signal indicative of a request to charge the electronic device **104.** In some embodiments, this signal may include, for example, an identification of the electronic device **104**, a battery level, power requirements of the electronic device **104**, or other information. For example, in some instances, the electronic device **104** may be a device having a lower power requirement, such as, for example, a smart-watch or other wearable technology. In order to avoid receiving a large power surge that would damage the smart-watch, the charge request could include a power limit, such as, 0.5 W. Alternative power levels may be utilized, as well. Similarly, the electronic device **104** may have a larger power requirement. In such cases, the charge request could include the larger power requirement, such as 5W, for charging the electronic device **104.**

Rather than receiving an active charge request, the charging surface may receive or sense any wireless or radiation signal from an electronic device that indicates that an electronic device is proximate to the charging surface, including but not limited to the presence or absence of reflection of an RF energy signal transmitted by the charging surface. Any receiver or sensor may be utilized to sense such a signal from an electronic device. In an alternative embodiment, a proximity switch or pressure switch may be utilized to detect that an electronic device is proximate to or positioned on the charging surface. Still yet, a magnetic switch or light switch may be utilized.

At step **904**, the microcontroller **208** initiates generation of an RF energy signal in accordance with the data provided in the charge request. For example, if the charge request indicates the power requirements of the electronic device **104**, then the microcontroller **208** causes the RF energy signal to be generated such that the power transmitted to the electronic device **104** complies with the power requirements communicated in the charge request. In accordance with the above example of a smart-watch, the microcontroller **208** may cause the charging surface **700** to generate an RF energy signal capable of providing wireless power transfer of 0.5W to the smart-watch. In one embodiment, if an electronic device is sensed, then an RF energy signal may be generated.

As discussed herein, the RF energy signal is generated in the unit cells of the charging surface **700**, and substantially remains in the unit cells until the RF energy signal decays or is leaked. When an antenna **304** tuned to the frequency of the RF energy signal is placed within a near-field distance from one or more of the unit cells, those unit cell(s) allow the RF energy signal to leak to the antenna **304** at step **906.**

As step **908**, the leaked RF energy signal is received at the antenna(s) **304** tuned to the frequency of the RF energy signal and placed within the near-field distance from the unit cell(s).

At step **910**, the received RF energy signal is converted to a power signal to charge the battery **312** of the electronic device **104.** This step may include detecting the RF energy signal received at the antenna **304**, activating the switch mechanism **305** when the RF energy signal is indicative of a power signal greater than the threshold value (e.g., 10 mW) rectifying the signal via the rectifier **306,** and converting the rectified signal to a DC power signal via the converter **308.** The power signal is then used to charge or operate the electronic device battery **312** at step **912.**

Although it is not illustrated in the flow diagram **900**, the communications component **310** may, in some embodiments, transmit a signal to the charging surface **700** to request that the charging be suspended or discontinued. This may happen, for example, if the battery **312** of the electronic device **104** is completely charged or reaches a desired charge level, the electronic device **104** is being turned off, the communications component 310 is being turned off or moved out of communication range with the communications component **210**, or for other reasons. In another embodiment, in the event that the electronic device is no longer being sensed, electronically, physically or otherwise depending on the sensor being utilized, then the communications component **210** may be turned off.

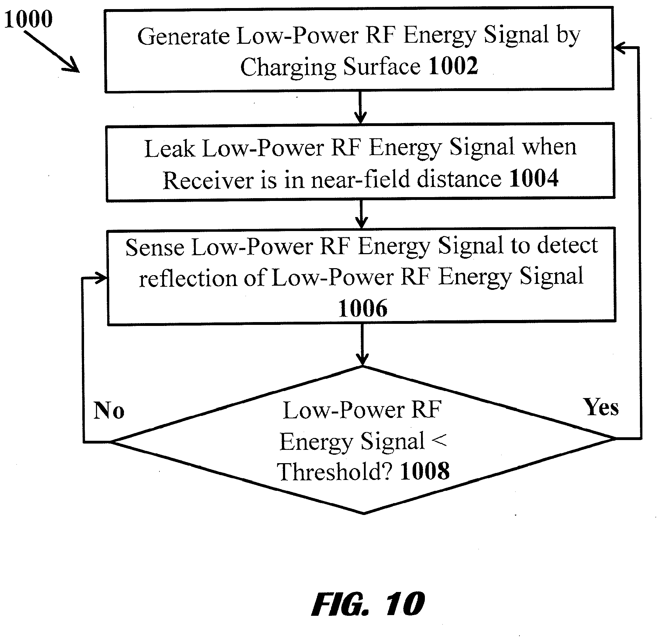

Referring now to **FIG. 10**, an example method is shown in flow diagram **1000** for sensing the presence of and charging the electronic device **104** with the charging surface **700** in accordance with an embodiment of the present disclosure. In the embodiment illustrated in **FIG. 10**, the electronic device **104** does not communicate with the charging surface **102** via respective communication components **210** and **310.** This embodiment is representative of instances where the electronic device **104** is turned off, has a drained battery, or is otherwise unable to communicate with the charging surface **700.** Thus, in the present embodiment, the charging surface **700** operates in a manner so as to avoid flooding an undetected electronic device **104** with excessive power. This is the manner that a receiver with a dead battery, and hence no ability to communicate with the transmitter, may be charged.

At step **1002**, the charging surface **700** generates a low-power RF energy signal, which is an RF energy signal capable of providing wireless, low-power transmission to an electronic device **104.** Specifically, the microcontroller **208** initiates generation of the low-power RF energy signal such that the power capable of being transmitted via the low-power RF energy signal is "low-power." For example, in some embodiments, low-power is 1W. Alternative power levels may be utilized, as well. In some embodiments, detecting that an electronic device is positioned within a near-field distance of the charging surface may be accomplished by activating the unit cell patch antennas **204** with a 1% duty cycle.

In accordance with the present disclosure, the low-power RF energy signal is generated in the unit cells of the charging surface **700**, and remains in the unit cells until the low-power RF energy signal decays or is leaked. When an antenna **304** (of a receiver) tuned to the frequency of the low-power RF energy signal is placed within a near-field distance from one or more of the unit cells, those unit cells allow the RF energy signal to leak to the antenna **304** at step **1004.**

At step **1006**, the microcontroller **208** may sense the low-power RF energy signal present in the unit cells. For example, in some embodiments, the microcontroller **208** may include sensing circuitry, such as, an RF coupler capable of detecting a "reflection" of the low-power RF energy signal, where the reflection is representative of, for example, approximately 10% of the low-power RF energy signal present in the unit cells. The microcontroller **208** may, therefore, calculate the low-power RF energy signal present in the unit cells based on the reflected value sensed by the microcontroller **208.** Although the sensing performed at step **1006** is illustrated in a sequential order in **FIG. 10**, it should be appreciated that this step may be performed in any order or repeated continuously in parallel with the processes performed in the flow diagram **1000.** The low-power RF energy signal may be generated periodically or aperiodically in a pulsed or other manner to determine if an electronic device is present, as indicated in the diagram **1000.**

Once the microcontroller **208** senses the low-power RF energy signal present in the unit cells, the sensed low-power RF energy is compared to a threshold value at step **1008** to determine whether to generate a subsequent low-power RF energy signal within the unit cells. Instances in which the sensed low-power RF energy signal is less than the threshold value are indicative of a situation in which the low-power RF energy signal has either decayed or leaked to an antenna tuned to the frequency of the low-power RF energy signal and positioned within a near-field distance from one or more of the unit cells. Thus, if the sensed low-power RF energy signal is less than the threshold, it is presumed the low-power RF energy signal has either leaked or decayed, so the process returns to step **1002** and the microcontroller **208** activates the antennas **204** to generate a subsequent low-power RF energy signal. Otherwise, when the reflection is above the threshold, the low-power RF energy signal remains in the substrate and subsequent RF signals are not generated so that the unit cells of the charging surface **700** do not continue to build up energy. Accordingly, the process returns to step **1006**, and the microcontroller **208** continues to sense the low-power RF energy signal present in the unit cells.

The method illustrated in **FIG. 10** is indicative of a situation in which no communication component **310** is communicating with the charging surface **700.** For example, the battery **312** of the electronic device **104** may be too depleted to activate the communication component **310.** However, once the battery **312** has sufficient charge, the electronic device **104** may, in some embodiments, activate the communication component **310.** At that time, the communication component **310** may initiate communication with the communication component **210** of the charging surface **700**, and the charging surface **700** may switch to the charging method illustrated in **FIG. 9** and described above.

### HARMONIC FILTER

In conventional power-transmission systems, various electronic elements that form the system are often lumped together, and losses experienced by each lumped element are compounded such that the system, as a whole, experiences a larger loss than each of the elements individually. For example, if a system has an antenna that is 90% efficient lumped with an amplifier that is 90% efficient, then the combined efficiency of a system comprising these two elements is approximately 81%. As more elements are added, the overall efficiency of the system is further reduced. Accordingly, in order to increase the efficiency of the disclosed charging surface, some embodiments of the charging surface may include filter elements such as, a harmonic filter, to reduce the radiated energy in frequencies other than the intended wireless charging signal, and specifically to reduce the energy in the harmonics of the intended wireless charging signal. A harmonic filter may, for example, attenuate these frequency components by 40dB to 70dB

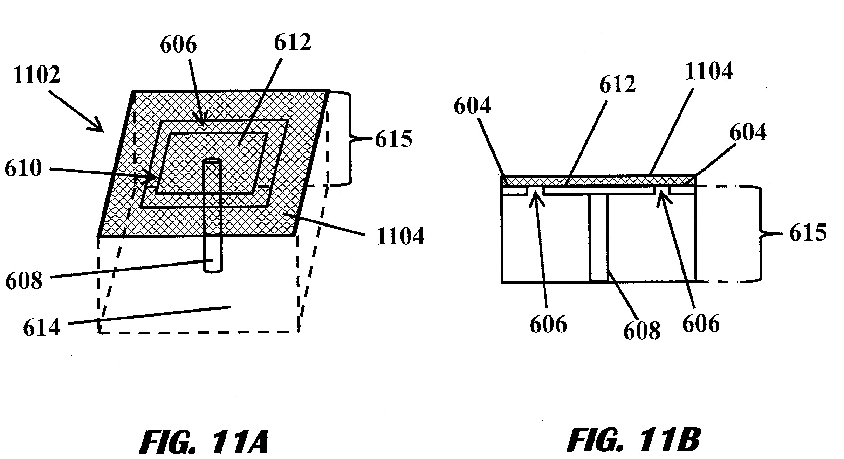

**FIG. 11A** and **FIG. 11B** illustrate perspective and cross-sectional views, respectively, of a representative unit cell **1102** comprising an embodiment of the charging surface **102**, where each unit cell **1102** has a harmonic filter element **1104** positioned on a top surface of the unit cell **1102.** The unit cell **1102** illustrated in **FIGS. 11A** and **11B** is similar to that described above and shown in **FIGS. 6A-6D****,** however, the harmonic filter element 1104 may be placed on a top surface of unit cells of a different embodiment, such as the embodiment described above and illustrated in **FIGS. 5A-5D****.**

It should be appreciated that the harmonic filter element **1104** included in each unit cell **1102** may be a discrete filter element, or it may be a portion of a larger, single harmonic filter element spanning the top surfaces of multiple unit cells **1102** forming the charging surface **102.** Thus, the charging surface **102** includes, in such embodiments, a harmonic filter element **1104** placed over the unit cells **1102** such that the charging surface **102** includes a harmonic filter positioned over a matrix (or array) of transmit antennas (e.g., patch antennas **610**).

In the embodiment illustrated in **FIGS. 11A** and **11B**, each of the unit cells **1102** includes a single substrate layer **615,** and the harmonic filter element **1104** present in each of the unit cells **1102** comprises a single harmonic filter element spanning the entire top surface area of the unit cells **1102.** In other embodiments, however, the harmonic filter element **1104** may include multiple harmonic filter elements, where one of the multiple harmonic filter elements are disposed on a top surface of one of the elements forming the unit cells **1102.** It should be understood that the unit cell with the harmonic rejection filter may be formed by a more complex unit cell, such as a unit cell that includes more layers and features within the unit cell. For example, this latter embodiment could be represented by a harmonic filter element **1104** placed on the top surface area of the patch antenna **610**, a harmonic filter element **1104** placed on the top surface area of the metal portion **604**, and no harmonic filter element covering the aperture **606.**

In some embodiments, the harmonic filter element **1104** is formed of two or more screen layers, wherein each layer includes a screen to filter out specific harmonics of the intended wireless charging signal. The harmonic filter **1104** acts to filter the RF energy signal generated by the patch antenna **610** such that the RF energy signal operates at a particular frequency (also referred to herein as a center frequency). As a result of the harmonic filter element **1104** being a passive mechanical device, loss in signal power is reduced as compared with an electronic filter.

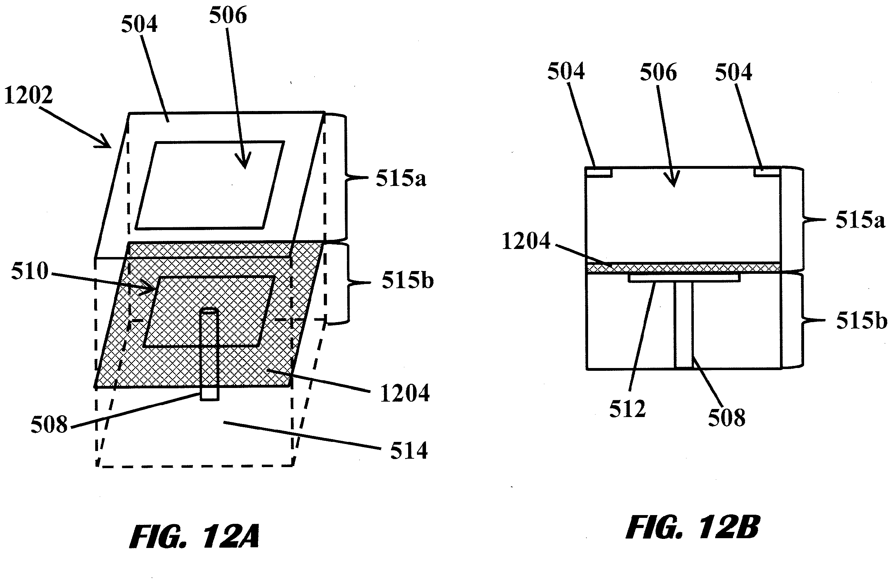

**FIGS. 12A** and **12B** illustrate perspective and cross-sectional views, respectively, of a representative unit cell **1202** comprising an embodiment of the charging surface **102**, where each unit cell **1202** has a harmonic filter element **1204** positioned within a top substrate layer **515a** of the unit cell **1202** (or optionally between the top substrate layer **515a** and a bottom substrate layer **515b**). It should be appreciated that the harmonic filter element **1204** included in each unit cell **1202** may be a discrete filter element, or it may be a portion of a larger, single harmonic filter element spanning the top substrate layers **515a** of multiple unit cells **1202** forming the charging surface **102.** Thus, the charging surface **102** includes, in such embodiments, a harmonic filter element **1204** placed within the top substrate layers **515a** of the unit cells **1202** such that the charging surface **102** includes a harmonic filter positioned over a matrix (or array) of transmit antennas (e.g., patch antennas **510**).

In the embodiment illustrated in **FIGS. 12A** and **12B**, the unit cells **1202** include a top substrate layer **515a** and a bottom substrate layer **515b**, and the harmonic filter element **1204** present in the top substrate layer **515a** of each of the unit cells **1202** comprises a single harmonic filter element spanning the entire area of the top substrate layer **515a** of the unit cells **1202.** In other embodiments, however, the harmonic filter element **1204** may span only a portion of the top substrate layer **515a** such that the harmonic filter element **1204** is disposed above only the patch antenna **510**, which is located in the bottom substrate layer **515b.**

In some embodiments, the harmonic filter element **1204** is formed of two or more screen layers, wherein each layer includes a screen to filter out specific harmonics of the intended wireless charging signal. The harmonic filter **1204** acts to filter the RF energy signal generated by the patch antenna **510** such that the RF energy signal operates at a particular frequency (also referred to herein as a center frequency). As a result of the harmonic filter element **1204** being a passive mechanical device, loss in signal power is reduced as compared with an electronic filter.

### RECEIVER DEVICE STACKING

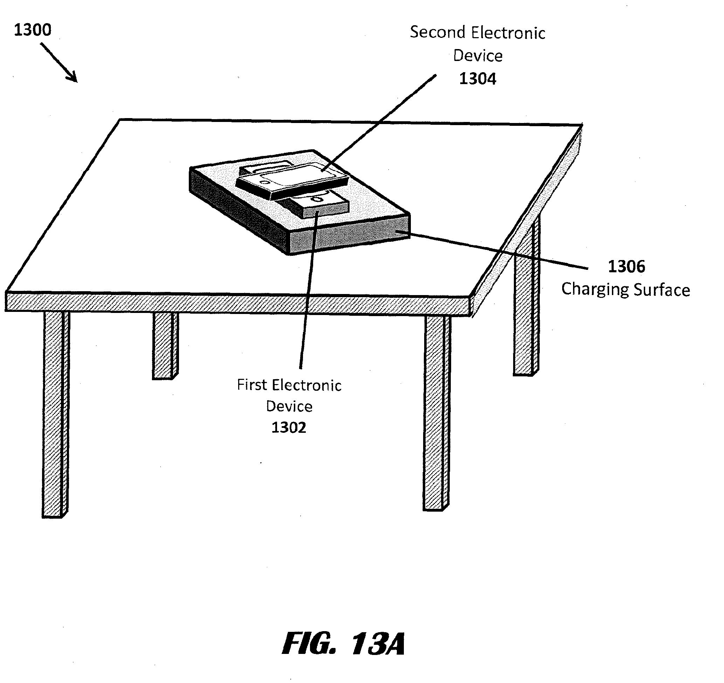

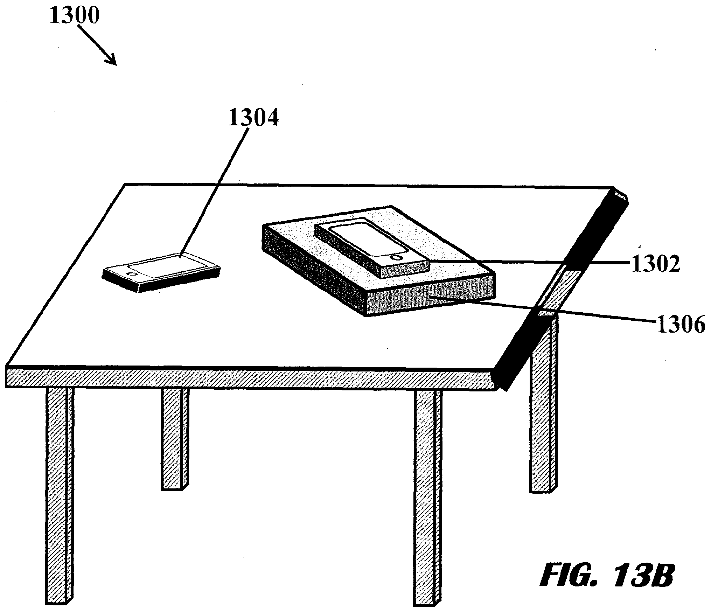

**FIGS. 13A** and **13B** show components of a wireless charging system 1300 among a plurality of electronic devices **1302**, **1304**, according to exemplary embodiments. For ease of explanation, **FIG. 13A** and **FIG. 13B** show wireless power transfer among two devices **1302**, **1304.** However, it will be appreciated by a person having ordinary skill in the art that wireless power transfer as described herein may occur among two or more electronic devices. In the exemplary embodiment, a first electronic device **1302** may receive power from a charging surface **1306** through near-field charging techniques, and may then, in turn, provide power to a second electronic device **1304.** In an alternative embodiment, the first electronic device **1302** may receive power using other techniques, such as far-field RF power transmission.

As shown in **FIG. 13A**, in some embodiments, the electronic devices **1302**, **1304** may be stacked or otherwise placed in contact with one another to effectuate the transfer of power from the charging surface **1306** to the first device **1302**, and then from the first device **1302** to the second device **1304.** As shown in **FIG. 13B**, the first device **1302** may receive power from the charging surface **1306** using near-field power transfer techniques, and then the first device **1302** may transfer power to the second device **1304** using far-field power transfer techniques.

Near-field RF power transmission techniques may include a transmitter-side charging surface **1306** comprising a number of physical layers, such as a substrate or cavity for trapping RF energy and a top surface on which to place an electronic device **1302**, **1304.** A near-field charging surface may be configured to introduce RF energy into a substrate or cavity layer, where the RF energy remains trapped until some physical condition is introduced by a receiver-side antenna or electronic device **1302, 1304.** In some implementations, the RF energy will be leaked through the surface of the charging surface **1306** only when an electronic device **1302**, **1304** having an appropriately tuned receiver-side antenna is placed close enough for the top surface to release the RF energy. In some implementations, the RF energy remains "trapped" within the substrate or cavity layer until the metal of an electronic device **1302**, **1304** contacts the surface layer. Other possible techniques may be used, though near-field techniques may generally refer to such systems and methods where the RF energy remains trapped within the charging surface **1306** until some physical condition is satisfied by a receiver-side electronic device **1302**, **1304** or receiver-side antenna. In many instances, this may have an operational distance ranging from direct contact to about 10 millimeters. For example, where the operation distance is one millimeter, the first electronic device **1302** would need to be within one millimeter before the RF energy will be leaked from the substrate or cavity layer of the charging surface **1306.**

Far-field RF power transmission techniques may include circumstances where a transmit-side device comprises an array of one or more antennas (not shown) configured to transmit RF power waves over some distance, which may range from less than an inch to more than fifty feet. In proximity far-field power transmission, the transmit-side device may be configured to transmit the power waves within a limited distance, such as less than twelve inches. This may be limited in any number of ways, such as requiring a receiver-side device to enter a proximity threshold from the transmit-side device before the transmit-side device will transmit power waves, or limiting the effective range for the power waves to deliver power. In some implementations, a transmit-side device functioning as a proximity transmitter may transmit the power waves to converge at or near a particular location so that the power waves generate constructive interference patterns. A receiver-side device may comprise an antenna and circuitry capable of receiving the resulting energy at the constructive interference patterns, and may then convert the energy to useable alternating current (AC) or direct current (DC) power for an electronic device coupled to the receiver device or comprising the receiver device.

Electronic devices **1302, 1304** may be any electronic device comprising near-field and/or far-field antennas capable of performing the various processes and tasks described herein. For instance, the first device **1302** and the second device **1304** may comprise antennas and circuitry configured to generate, transmit and/or receive RF energy using RF signals. In **FIGS. 13A** and **13B**, the first device **1302** and the second device **1304** are shown as cellular phones. However, this should be not considered to be limiting upon possible electronic devices **1302**, **1304.** Non-limiting examples of possible electronic devices **1302**, **1304** may include tablets, laptops, cell phones, PDAs, smart watches, fitness devices, headsets, or any other device capable of being recharged or operated utilizing the principles described herein.

A charging surface **1306** may generate one or more RF energy signals for wireless power transmission that are trapped in a substrate or cavity beneath a top surface of the charging surface **1306.** The trapped RF energy may be leaked through the top surface and received by the first device **1302** when an appropriately tuned antenna of the first device **1302** is positioned within a near-field distance (e.g., less than approximately 10 mm) from the charging surface **1306.** The appropriately tuned antenna of the first device **1302** may thus cause the RF signals trapped within the charging surface **1306** to be leaked or emitted through the charging surface **1306** to the antenna of the first device **1302.** The received RF energy signals are then converted to a power signal by a power conversion circuit (e.g., rectifier circuit) for providing power to or charging a battery of the first device **1302.** In the exemplary embodiments shown in **FIGS. 13A** and **13B**, the charging surface **1306** may be shown as a box-shaped device, but it should be understood that the charging surface **1306** may have any form-factor, configuration, and/or shape. In some embodiments, the total power output by the charging surface **1306** is less than or equal to 1 Watt to conform to Federal Communications Commission (FCC) regulations part 15 (low-power, non-licensed transmitters).

Similar to the manner in which the charging surface **1306** may function as a transmitter-side device in relation to the first electronic device **1302,** the first electronic device **1302** may be configured to likewise function as a transmitter-side device in relation to a second electronic device **1304.**

As shown in **FIG. 13A**, in some embodiments, the first device **1302** may comprise components for a near field RF charging surface, similar to the charging surface **1306**, allowing RF energy signals to be trapped beneath a surface layer of the first device **1302** until an appropriately tuned antenna of a second device **1304** causes the RF energy to be leaked into the antenna of the second device **1304.**

Additionally or alternatively, as shown in **FIG. 13B**, in some implementations, the first device **1302** may be configured to function as a far-field proximity transmitter comprising an array of one or more antennas configured to transmit one or more power waves to an antenna of the second electronic device **1304.**

In some embodiments, the first device **1302** may include a communications component (not shown) to effectuate wireless and/or wired communications to and from other devices, such as the second device **1304.** In some cases, a communications component may be an embedded component of the first device **1302;** and, in some cases, the communications component may be attached to the first device **1302** through any wired or wireless communications medium. The communications component may comprise electromechanical components (e.g., processor, antenna) that allow the communications component to communicate communications signals containing various types of data and messages with other devices, such as the second device **1304.** These communications signals may represent a distinct channel for hosting communications where data may be communicated using any number of wired or wireless protocols and associated hardware and software technology. The communications component may operate based on any number of communication protocols, such as Bluetooth®, Wireless Fidelity (Wi-Fi), Near-Field Communications (NFC), ZigBee, and others. However, it should be appreciated that the communication component is not limited to radio-frequency based technologies, but may include radar, infrared, and sound devices for sonic triangulation of other devices, like the second device **1304.**

In operation, the communications component of the first device **1302** may receive communications signals from the second mobile device **1304**, where the communications signals include data that includes a request to receive power from the first device **1302.** Additionally or alternatively, the first electronic device **1302** may receive one or more wireless broadcasted messages from the second device **1304**, thereby allowing the first electronic device **1302** to detect the presence of the second electronic device **1304** and begin sending power to the second electronic device **1304**, or to begin flooding a substrate or cavity layer with RF energy. Such request messages may also include data related to the type of device, battery details of the device, such as battery type and present battery charge, and present location of the device. In some implementations, the first electronic device **1302** may use the data contained within the messages to determine various operational parameters for transmitting or otherwise transferring RF energy to the second device **1304**, which the second device **1304** may capture and convert the RF energy into useable alternating current (AC) or direct current (DC) electricity.

For example, when the first device **1302** functions as a near-field charging surface, the first device **1302** may be configured to send power (e.g., engage, turn on, wake up) to a near-field charging surface within the first device **1302** when the communications component of the first electronic device **1302** receives a communications signal having a threshold signal strength indicating that the second device **1304** is within a threshold distance.

As another example, where the first device **1302** functions as a far-field proximity transmitter, the first device **1302** may use the communications signal receive data from the second device **1304** that may be used by the first device **1302** to identify the location of second device **1304** and to determine whether the second electronic device **1304** is within a threshold distance from the first device **1304.**

Similarly, a communications component of the second device **1304** may use a communications signal to communicate data that may be used to, for example, send or otherwise broadcast a message to the first device **1302** requesting the first device **1302** to transfer power; the messages may also include, for example, battery power information, data indicating present location, data information about the user of the second device **1304**, information about the second device **1304** to be charged, indicate the effectiveness of the power being received, and a request to stop sending the power, as well as other types of useful data. Non-limiting examples of the various types of information that may be included in communications signals may also include a beacon message, a device identifier (device ID) for first device **1302**, a user identifier (user ID) for the first device **1302**, the battery level for the second device **1304**, the second device **1304** location, and other such information.

In some cases, when the second device **1304** enters a near-field distance of the first device **1302** in which the RF energy can be leaked and emitted from the first device **1302** into the second device **1304**, the devices may establish a communications channel according to the wireless or wired communications protocol (e.g. Bluetooth®) employed by the respective communications components of the respective devices **1302**, **1304.** In some cases, the second device **1304** may establish a communication channel with the first device **1302** upon entering the effective communications distance of the first device **1302** of the wired or wireless communications protocols employed by the communications components. A near-field distance may be defined as a minimum distance between a transmitter-side device (e.g., charging surface **1306**) and a receiver-side device (e.g., first electronic device **1302**) that would cause the transmitter-side device to leak and transfer trapped RF wave signals into the appropriately tuned receiver-side device. This near-field distance may range from direct contact to about 10 millimeters. In some cases, a proximate far-field distance may be the minimum distance between a transmitter-side device and a receiver-side device that allows for transmitting one or more power waves to the receiver-side device, which may range up to about 12 inches. In an alternative embodiment, any far-field distance can be used.

The antennas of the second device **1304** may capture energy from the RF signals leaked or emitted from the first device **1302** or from the power waves transmitted from the first device **1302.** After RF signals are received from the power waves or from the leakage, from either the charging surface **1306** or the first device **1302**, circuitry and other components (e.g., integrated circuits, amplifiers, rectifiers, voltage conditioner) of both the first and second devices **1302**, **1304** may then convert the energy of the RF signals (e.g., radio frequency electromagnetic radiation) to electrical energy (i.e., electricity), which may be stored into a battery or may power the respective electronic device **1302**, **1304.** In some cases, for example, a rectifier of a second device **1304** may convert the electrical energy from AC to DC form, usable by the second device **1304.** Other types of conditioning may be applied as well, in addition or as an alternative to, conversion from AC to DC. For example, a voltage conditioning circuit, such as a voltage regulator, may increase or decrease the voltage of the electrical energy as required by the second device **1304.**

In an alternate embodiment, the first device **1302** may also send a charging request to the second device **1304.** The charging request may include data related to user of the first device **1302,** details of the first device **1302,** battery charge of the first device **1304**, current location of the first device **1302.** Upon receiving a charging request, the second device **1304** may accept or decline the request. The second device **1304** may also request additional details related to but not limited to user of the first device **1302**, details of the first device **1302,** battery charge of the first device **1302**, current location of the first device **1302**, if such details were not present with the request. On accepting the request, the second device **1304** may determine the location of the first device **1302.** The second device **1304** may use one or more technologies such as sensor detection, heat-mapping detection, and others to determine the location of the first device **1302.** Once the location of the first device **1302** is determined, then the second device **1304** may transmit RF signals to the first device **1302**, which may be captured by antennas and/or circuitry of the first device **1302** to charge a battery of the first device **1302.**

Referring again to **FIG. 13A**, in some embodiments, the first device **1302** and the second device **1304** may be placed on top of each other to transfer power from one or another, with or without the presence of charging surface **1306.** In another embodiment, the first device **1302** and the second device **1304** may be on same plane and proximate to each other to transfer power from one or another device as depicted in **FIG. 13B****.** It will be appreciated by a person with ordinarily skill in the art that the power transfer between the first device **1302** and the second device **1304** will occur when the devices are in near-field distances from each other irrespective of their placement with respect to each other.

In an embodiment, the first device **1302** may receive power from the charging surface **1306**, and at the same time transfer the power to the second device **1304** in its near-field. In another embodiment, the first device **1302** may receive power from any suitable source of receiving power (for example, far-field antennas) and at the same time transfer the power to the second device **1304** within a near-field distance. In yet another embodiment, the first device **1302** and the second device **1304** may transfer power to a third device in their near-field. In yet another embodiment, each of the first device **1302** and the second device **1304** independently or collectively transfer power to two or more devices in their near-field.

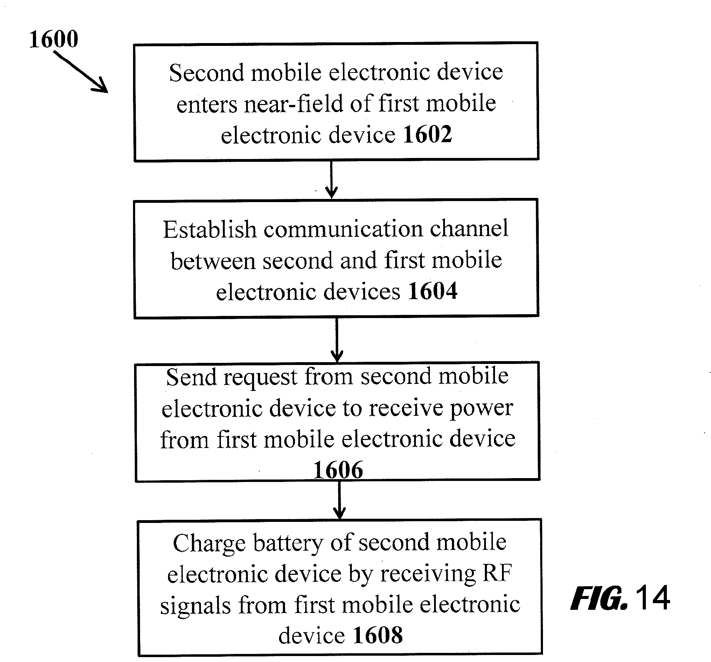

**FIG. 14** is a flow diagram illustrating operations of the wireless power transfer among a plurality of devices, in accordance with an embodiment the present disclosure.

At step **1602**, a second device enters a near-field distance of a first device. In an embodiment, a user of second device may manually place the second device in a near-field distance from the first device. The near-field distance may be less than about 10 mm. The first device and the second device may include circuitry configured to generate, transmit and receive RF signals. The circuitry of the first device and the second device may include a plurality of unit cells, and the plurality of unit cells is configured to receive an RF signal.

At step **1604**, a communication channel is established between the second and the first devices. The first and the second device may include a communication component via which a communication channel may be established to transmit data among each other. The communications component may operate based on any number of communication protocols, such as Bluetooth®, Wireless Fidelity (Wi-Fi), Near-Field Communications (NFC), ZigBee, and others.

In one embodiment, the communication channel may be established between the first and the second devices prior to the second device entering the near-field of the first device. In another embodiment, the communication channel may be established between the first and the second devices after the second device enters the near-field of the first device.

At step **1606**, the second device then sends a request to receive power to the first device via the communication channel for charging its battery. In another embodiment, a user of the second device via a user interface of the second device sends a request to receive power to the first device. Along with the request, the second device may include additional data including but not limited to user of the second device, details of the second device, battery charge of the second device, or current location of the second device. Upon receiving a charging request, the first device may accept or decline the request. In another embodiment, a user of the first device may accept or decline the request via the user interface of the first device. The response to the request may be received on the user interface of the second device.

At step **1608**, the second device may charge a battery using received RF signals from the first device. After accepting the request of the second device, the first device may determine the location of the second device. Once the location of the second device is determined, then the first device may transmit RF signals to the second device, which may be captured by antennas and/or circuitry of the second device to charge the battery of the second device.

In some embodiments the initiation of the power transfer from the first device to the second device is done by a user of the devices on a user interface of the first and/or second devices. The user may select when to start, stop wireless charging from one device to the other, and the user may further select which device becomes the transmitter and which device becomes the receiver. Furthermore, the user may select termination of the power transfer by selecting a target time, target power level, etc.

The antennas of the second device may harvest energy from RF signals, which may be formed from the resulting accumulation of the RF signals at its location. After the RF signals are received and/or energy is gathered from a pocket of energy, circuitry (e.g., integrated circuits, amplifiers, rectifiers, voltage conditioner) of the second device may then convert the energy of the RF signals (e.g., radio frequency electromagnetic radiation) to electrical energy (i.e., electricity), which may be stored into a battery of the second device.

In one embodiment, the circuitry of the first device includes a plurality of unit cells configured to receive the RF signal and cause an RF energy signal to be present for charging the battery of the second device in response to antenna of the second device being positioned in the near-field distance of at least one of the unit cells. In another embodiment, the circuitry of the second device includes a plurality of unit cells configured to receive the RF signal and cause an RF energy signal to be present for charging a battery of the first device in response to an antenna of the first device being positioned in the near-field distance of at least one of the unit cells.

The foregoing method descriptions and flow diagrams are provided merely as illustrative examples and are not intended to require or imply that the steps of the various embodiments must be performed in the order presented. The steps in the foregoing embodiments may be performed in any order. Words such as "then," "next," etc., are not intended to limit the order of the steps; these words are simply used to guide the reader through the description of the methods. Although process flow diagrams may describe the operations as a sequential process, many of the operations can be performed in parallel or concurrently. In addition, the order of the operations may be rearranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or the like, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory, processor-readable storage media may be any available media that may be accessed by a computer. By way of example, and not limitation, such non-transitory, processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory, processor-readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

While various aspects and embodiments have been disclosed, other aspects and embodiments are contemplated. The various aspects and embodiments disclosed are for purposes of illustration and are not intended to be limiting, with the true scope and spirit being indicated by the following claims.

## Claims

1. A near-field transmitter comprising:
a feed that is configured to receive radio frequency (RF) energy from a power source;
a housing with a cover (802) and metallic sidewalls (106), the housing defining first and second cavities that are separated by a ground plane; and
a plurality of touch points extending from the second cavity to the cover of the housing, wherein:
each touch pointtouch point of the plurality of touch pointtouch points is located in a different region of the cover;
the feed is configured to provide the RF energy to the first cavity;
the first cavity is configured to retain the RF energy provided by the feed;
a respective touch point of the plurality is configured to leak the RF energy to a wireless-power-receiving antenna of a first electronic device when a metal part of the first electronic device is positioned on the cover at a point that contacts the respective touch point, the respective touch point being a first touch point of the plurality of touch points; and
a second touch point of the plurality is configured to leak the RF energy to a wireless-power-receiving antenna of a second electronic device when a metal part of the second electronic device is positioned on the cover at a different point that contacts the second touch point.

2. The near-field transmitter of claim 1, wherein the plurality of touch points includes an additional touch point distinct from the first and second touch points.

3. The near-field transmitter of claim 1, wherein the plurality of touch points includes at least four touch points.

4. The near-field transmitter of claim 3, wherein:
the at least four touch points are spaced apart from one another and form a rectangular shape; and
the at least four touch points are located at respective corners of the rectangular shape.

5. The near-field transmitter of claim 1, wherein each touch point of the plurality of touch points is not directly connected to the power source.

6. The near-field transmitter of claim 1, wherein each respective touch point of the plurality of touch points also extends from the first cavity, through the ground plane, to the cover of the housing.

7. The near-field transmitter of claim 1, wherein the respective touch point is configured to leak the RF energy so that it:
traverses between the metal part of the first electronic device and the housing; and enters a housing of the first electronic device via one or more gaps in the housing of the first electronic device to be received by the wireless-power-receiving antenna of the first electronic device.

8. The near-field transmitter of claim 7, wherein:
a portion of the metal part of the first electronic device is positioned on the cover; and
the respective touch point is configured to leak the RF energy so that it traverses between the (i) portion of the metal part positioned on the cover and (ii) the cover.

9. The near-field transmitter of claim 1, wherein:
the RF energy leaked by the respective touch point when the metal part of the first electronic device contacts the respective touch point is leaked at a frequency; and
the wireless-power-receiving antenna of the electronic device is tuned to receive the leaked RF energy at the frequency.

10. The near-field transmitter of claim 1, wherein:
the cover defines a plurality of openings; and
each touch point is disposed within a respective opening of the plurality of openings.

11. The near-field transmitter of claim 1, wherein each touch point of the plurality of touch points is made from a metal.

12. The near-field transmitter of claim 1, wherein the ground plane is positioned within the housing substantially parallel to the cover.

13. The near-field transmitter of claim 12, wherein the ground plane is made from a metamaterial.

14. A method of wirelessly charging an electronic device, the method comprising:
at a near-field transmitter comprising a feed, a housing with a cover and metallic sidewalls,
the housing defining first and second cavities that are separated by a ground plane, and a plurality of touch points extending from the second cavity to the cover of the housing:
receiving, by the feed, radio frequency (RF) energy from a power source;
providing, by the feed, the RF energy to the first cavity;
retaining, by the first cavity, the RF energy provided by the feed;
leaking, by a respective touch point of the plurality, the RF energy to a wireless-power-receiving antenna of a first electronic device when a metal part of the first electronic device is positioned on the cover at a point that contacts the respective touch point, the respective touch point being a first touch point of the plurality of touch points; and
leaking, by a second touch point of the plurality, the RF energy to a wireless-power-receiving antenna of a second electronic device when a metal part of the second electronic device is positioned on the cover at a different point that contacts the second touch point, wherein each touch point of the plurality of touch points is located in a different region of the cover.

15. The method claim 14, wherein each touch point of the plurality of touch points is not directly connected to the power source.
